# EUROPÄISCHE PATENTSCHRIFT

(11) **EP 1 986 769 B1**
(45) Veröffentlichungstag und Bekanntmachung des Hinweises auf die Patenterteilung: **13.07.2011**
(21) Anmeldenummer: 07704563.1
(22) Anmeldetag: 13.02.2007
(51) Int. Cl.: B01D 71/68, B01D 71/82, C08G 65/48, C08G 79/04

(54) **KATALYTISCHES VERFAHREN FÜR DIE PHOSPHONYLIERUNG VON HOCHTEMPERATURPOLYMEREN**
CATALYTIC PROCESS FOR THE PHOSPHONYLATION OF HIGH-TEMPERATURE POLYMERS
PROCEDE CATALYTIQUE DE PHOSPHONYLATION DE POLYMERES A HAUTE TEMPERATURE

(30) Priorität: 16.02.2006 EP 06110052
(43) Veröffentlichungstag der Anmeldung: 05.11.2008
(73) Patentinhaber: BASF SE, 67056 Ludwigshafen (DE)
(72) Erfinder: MOEHWALD, Helmut, 76855 Annweiler (DE); MÜHLHAUPT, Rolf, 79117 Freiburg (DE); BOCK, Thorsten, 79104 Freiburg (DE)
(86) Internationale Anmeldenummer: PCT/EP2007/051391
(87) Internationale Veröffentlichungsnummer: WO 2007/093596

(56) Entgegenhaltungen:
- EP-A1- 1 238 998
- DE-A1- 10 148 131

## Beschreibung

Die vorliegende Erfindung betrifft ein Verfahren zur Herstellung von polymeren aromatischen Phosphonaten sowie polymere aromatische Phosphonate herstellbar nach den erfindungsgemäßen Verfahren und Mischungen, die diese polymeren aromatischen Phosphonate sowie mindestens ein weiteres Polymer enthalten, sowie Filme, Composit-oder Verbundmaterialien und Membranen enthaltend diese Polymere oder Mischungen, die Verwendung der erfindungsgemäßen Membranen in Brennstoffzellen oder in der Trenntechnik sowie Brennstoffzellen, enthaltend die erfindungsgemäßen Membranen.

Polymere aromatische Phosphonate und deren Verwendung sind im Stand der Technik bekannt. Beispielsweise werden in der Brennstoffzellentechnik polymere aromatische Phosphonate als oder in Polymerelektrolytmembranen verwendet. Diese polymeren aromatischen Phosphonate sind zum lonenaustausch, bevorzugt zur Aufnahme und Abgabe von Protonen, befähigt. Die mit Phosphonsäuregruppen substituierten aromatischen Polymere zeichnen sich gegenüber den üblicherweise als Materialien für Brennstoffzellen eingesetzten sulfonierten aromatischen Polymeren durch eine verbesserte chemische und/oder thermische Stabilität aus, so dass Membranen aufgebaut aus polymeren aromatischen Phosphonaten bei höheren Temperaturen eingesetzt werden können als sulfonierte aromatische Polymere.

Die Herstellung von polymeren aromatischen Phosphonaten kann grundsätzlich durch direkte Copolymerisation von Phosphonsäure-Funktionen enthaltenden Monomeren mit weiteren Monomeren oder durch polymeranaloge Reaktionen zur Einführung der Phosphonsäure-Funktion erfolgen. Im Allgemeinen werden polymeranaloge Reaktionen bevorzugt, da Phosphonsäuren und deren Derivate die Polykondensationsreaktionen bei der Synthese von polymeren aromatischen Verbindungen wie Polyarylenen, Polyaryletherketonen und Polyarylethersulfonen in der Regel stark beeinträchtigen.

Die Einführung der Phosphonsäure-Funktionen in polymere aromatische Verbindungen ist im Stand der Technik beschrieben.

So betrifft K. Miyatake et al., J. Poly. Sci. A: Poly. Chem. 2001, 39,3770 bis 3779, Polyarylenether, die Phosphonsäuregruppen aufweisen. Die Einführung der Phosphonsäuregruppen erfolgt dabei durch Pd-katalysierte C-P-Kupplung von Diethylphosphit an bromierte Poylarylenether mittels Tetrakis(triphenylphosphin)palladium. Es wird darauf hingewiesen, dass die klassische Arbuzov-Reaktion unter Einsatz von Triethylphosphit und Nickeldichlorid als Katalysator extreme Reaktionsbedingungen (Temperaturen von ca. 160°C) benötigt und lediglich niedrige Ausbeuten ergibt. Gemäß K. Miyatake konnte eine quantitative Phosphonierung erreicht werden, wenn 50 mol% des Katalysators in Bezug auf das in dem als Ausgangsprodukt eingesetzten bromierten Polymeren vorhandene Brom eingesetzt werden. Bei geringeren Katalysator/Brom-Verhältnissen konnten nur teilhalogenierte und somit in der Brennstoffzelle instabile und korrosive Stoffe abspaltende Produkte erhalten werden.

K. Jakoby et al., Macromol. Chem. Phys. 2003, 204, 61 bis 67, betrifft die Palladiumkatalysierte Phosphonierung von Polyphenylsulfonen. Gemäß K. Jakoby ist eine Funktionalisierung von aromatischen Polymeren grundsätzlich entweder durch klassische Michaelis-Arbuzov-Reaktion unter Einsatz von Pd(II)- oder Ni(II)-Salzen und Trialkylphosphit möglich oder durch Pd(0)-katalysierte P-C-Kupplung. Die erstgenannte Methode (Michaelis-Arbuzov) ist jedoch nicht besonders erfolgreich. Gemäß den Beispielen in K. Jacoby konnte mit Hilfe der Michaelis-Arbuzov-Reaktion kein phosphoniertes Produkt erhalten werden, da die eingesetzten Lösemittel DMAc sowie NMP zu Katalysator-Desaktivierung führten. Gemäß K. Jacoby genügt bei Durchführung einer P-C-Kupplung eine Katalysatorkonzentration von 2,5 mol-%, bezogen auf die molare Menge des Broms in der als Ausgangsprodukt eingesetzten bromierten polyaromatischen Verbindung.

Laut der Veröffentlichung von K. Jakoby et al. verbleiben im polymeren Produkt 100 % Brom je Repetiereinheit. Auf Grund der Enthalogenierung sind zusätzlich zur Entwicklung korrosiver HBr bei Brennstoffzellen-Betrieb zeitlich veränderliche Materialeigenschaften zu erwarten, d.h. zum Beispiel mechanische Belastung der Membran durch Änderung des spezifischen Volumens.

DE-A 101 48 131 betrifft ein Verfahren zur Herstellung von protonenleitfähigen Membranen, die ein Polymer enthalten, das Phosphonsäuregruppen aufweist. Dieses Polymer wird durch Bromierung oder lodierung eines Basispolymers enthalten, wobei das bromierte oder iodierte Polymer anschließend mit Phosphonsäureestem und/oder Phosphorigsäureestern in Anwesenheit eines Übergangsmetallkatalysators umgesetzt wird. Das erhaltene Polymer wird anschließend hydrolysiert, um ein für die Membranherstellung gewünschtes phosphoniertes Polymer zu erhalten. Die Phosphonierung erfolgt gemäß den Beispielen durch P-C-Kupplung eines bromierten Polysulfons mit Diethylphosphit in Anwesenheit eines Pd(0)-Katatysators. Gemäß den Beispielen wird lediglich eine unvollständige Phosphonierung entsprechend einem maximalen Substitutionsgrad von 88 % pro Repetiereinheit des Polymers erreicht.

Die Michaelis-Arbuzov-Reaktion zur Herstellung von aromatischen Phosphonsäureestem ist für niedermolekulare Verbindungen in P. Tavs, Chem. Ber. 103, 2428 bis 2436 (1970) offenbart. Darin wird die Umsetzung von Arylhalogeniden mit Trialkylphosphiten zu aromatischen Phsophonsäureestem beschrieben. Die Umsetzung erfolgt in Anwesenheit katalytischer Mengen NiCl₂ oder NiBr₂ in Abwesenheit von weiteren Lösungsmitteln.

US 6,828,407 B2 betrifft Polymerelektrolytzusammensetzungen, die ein aromatisches Polyphosphonsäurederivat enthalten. Gemäß US 6,828,407 B2 wird das Phosphonsäurederivat durch Reaktion eines bromierten aromatischen Polymers mit Trialkylphosphit in Anwesenheit eines Nickelhalogenidkatalysators in einem organischen Lösungsmittel erhalten. Als organisches Lösungsmittel wird gemäß US 6,828,407 B2 eine Amidverbindung eingesetzt. Um eine möglichst vollständige Umsetzung aller im Polymer enthaltenen Bromgruppen zu ermöglichen ist es erforderlich, den Nickelhalogenidkatalysator in einer Menge von 1 bis 3, bevorzugt 1,5 bis 2 Mol basierend auf 1 Mol Bromgruppe in dem bromierten aromatischen Polymer einzusetzen. Gemäß den Beispielen in US 6,828,407 B2 beträgt das molare Verhältnis von eingesetztem Nickel-Katalysator zu dem molaren Anteil Brom in dem bromierten aromatischen Polymer 1,5 zu 1. Das erhaltene Polymer enthält jedoch einen Restanteil an Bromatomen.

Für den Fachmann wäre es sehr wünschenswert, eine Phosphonylierung unter vollständiger Eliminierung des Halogengehalts des erhaltenen polymeren aromatischen Phosphonats zu erzielen, da nicht umgesetzte Reste der halogenierten Vorstufen des polymeren aromatischen Phosphonats bei Einsatz der Polymere als Membran in Brennstoffzellen mit Wasserstoff an Pt-Kontakten beim Betrieb der Brennstoffzelle Halogenwasserstoffe, die als starke Säuren die Korrosion der Zelle bewirken können, bilden. Des Weiteren ist es wünschenswert, den Katalysatorbedarf, der gemäß den Verfahren des Standes der Technik sehr hoch ist, zu senken.

Aufgabe der vorliegenden Erfindung ist es daher, ein Verfahren bereitzustellen, durch das Halogen-freie polymere aromatische Phosphonate erhältlich sind und das mit einer geringeren Menge an Katalysator auskommt als die Verfahren des Standes der Technik. Eine weitere Aufgabe der vorliegenden Erfindung ist die Bereitstellung von Halogen-freien polymeren aromatischen Phosphonaten, die zur Herstellung von Membranen, zum Beispiel für Brennstoffzellen, geeignet sind.

Diese Aufgabe wird gelöst durch ein Verfahren zur Herstellung von polymeren aromatischen Phosphonaten durch Reaktion von halogenierten Polyarylenverbindungen mit Phosphorigsäureestem in Anwesenheit eines Katalysators enthaltend mindestens ein Metall ausgewählt aus der Gruppe bestehend aus Ni, Pd, Pt, Rh, Ru; Os und Ir, wobei die Reaktion in einem stickstofffreien Lösungsmittel bei Temperaturen von 150°C bis 250°C erfolgt.

Erfindungsgemäß wurde gefunden, dass bei der katalytischen Phosphonylierung von halogenierten Polyarylenverbindungen in stickstofffreien Lösungsmitteln bei Temperaturen ab 150°C ein vollständiger Umsatz der halogenierten Polyarylenverbindungen bereits bei geringen Mengen des eingesetzten Katalysators erreicht werden kann. Die bei der Phosphonylierung entstehenden Alkylhalogenide können bei den erfindungsgemäß hohen Reaktionstemperaturen sehr effektiv aus der Reaktionsmischung entfernt werden, so dass sie nicht in einer Michaelis-Arbuzov-Nebenreaktion zu schwer abtrennbaren (Alkyl)Phosphonsäureestem weiter reagieren.

Mit dem erfindungsgemäßen Verfahren ist nicht nur die Phosphonylierung von elektronenreichen Aryloxy-Einheiten in den halogenierten Polyarylenverbindungen möglich, sondern auch die Phosphonylierung von elektronenarmen Arylgruppen. Dies bietet Zugang zu höheren Funktionalisierungsgraden der Polyarylenverbindungen, wobei gleichzeitig durch die ausgeprägtere elektronenziehende Wirkung der elektronenarmen Arylgruppen eine verstärkte Säurewirkung der eingeführten Phosphonsäuregruppe vorliegt. Des Weiteren bietet das erfindungsgemäße Verfahren die Möglichkeit einer Phosphonylierung von elektronenarmen Polyarylenverbindungen, die mit anderen im Stand der Technik bekannten Verfahren nicht oder schlecht funktionalisierbar sind. So ist mit Hilfe des erfindungsgemäßen Verfahrens zum Beispiel eine Phosphonylierung von elektronenarmen Poly(ethersulfonen) wie Ultrason® E möglich. Es sind im Stand der Technik zum Beispiel bisher lediglich zwei Methoden zur Funktionalisierung von Ultrason® E bekannt, nämlich eine Sulfonierungsmethode (Coplan et al, US-Patent 4,413,106) und eine zu starkem Abbau führende Bromierungsmethode (A. Botvay et al, J. appl. Poly. Sci.; 74, 1-3, 1999). So konnte mit der von K. Jakoby et al. beschriebenen Pd-katalysierten Phosphonylierung an bromiertem Ultrason^{®} E keinerlei Umsetzung erzielt werden.

Die mit Hilfe des erfindungsgemäßen Verfahrens hergestellten polymeren aromatischen Phosphonate sind bevorzugt halogenfrei. Dabei bedeutet "hatogenfrei" im Sinne der vorliegenden Anmeldung, dass der Gehalt an Halogen in den polymeren aromatischen Phosphonaten weniger als 1 Gew.-%, bevorzugt weniger als 0,5 Gew.%, besonders bevorzugt weniger als 0,3 Gew.-%, jeweils bezogen auf die Masse des polymeren aromatischen Phosphonats, beträgt.

Bevorzugt weisen die mit dem erfindungsgemäßen Verfahren hergestellten polymeren aromatischen Phosphonate Einheiten der allgemeinen Formel I auf: 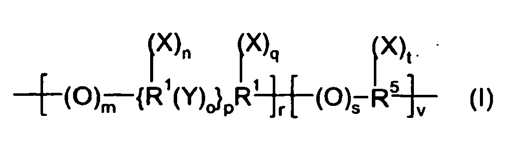 worin bedeuten:
- X: -P(=O)(OR²)(OR³),
- Y: Carbonyl oder Sulfonyl,
- R¹, R⁵: unabhängig voneinander 2- oder polyvalente aromatische Reste, die substitu- iert oder unsubstituiert sein können und gegebenenfalls Heteroatome enthal- ten können,
- m, o, s: unabhängig voneinander 0 oder 1,
- n, q, t: unabhängig voneinander 0 oder eine ganze Zahl, wobei n, q und t nicht gleich- zeitig 0 sind,
- r, v: unabhängig voneinander 0 bis 1, wobei die Summe von r und v 0,95 bis 1,05 beträgt,
- p: 0 oder eine ganze Zahl ≥ 1,
- R², R³: unabhängig voneinander Alkyl, Alkenyl, Cycloalkyl, Aralkyl, wobei die vorste- hend genannten Gruppen substituiert sein können und/oder Heteroatome ent- halten können.

Im Sinne der vorliegenden Anmeldung bedeutet Alkyl einen linearen oder verzweigten Alkylrest, der im Allgemeinen 1 bis 20, bevorzugt 1 bis 8, besonders bevorzugt 1 bis 6, ganz besonders bevorzugt 1 bis 4 Kohlenstoffatome aufweist. Es ist des Weiteren möglich, dass die Kohlenstoffkette der Alkylgruppe durch Heteroatome bzw. Heteroatom-haltige Gruppen unterbrochen ist, zum Beispiel durch O oder durch NR⁶, wobei R⁶ wiederum Alkyl, Alkenyl, Cylcoalkyl, Aryl oder Aralkyl bedeuten kann. Geeignete Alkylgruppen sind beispielsweise Methyl, Ethyl, n-Propyl, i-Propyl, n-Butyl, s-Butyl, t-Butyl, 1-Pentyl, t-Pentyl, 1-Hexyl, 1-Octyl, i-Octyl, t-Octyl, 2-Ethylhexyl, Nonyl, Decyl, Undecyl, Dodecyl, Tridecyl, Tetradecyl, Pentadecyl, Hexadecyl, Hepatadecyl, Octadecyl, Nonadecyl, Eicosyl, 1,4-Tetramethylen. Die Alkylgruppen können des Weiteren substituiert sein mit Alkenyl, Cycloalkyl, Aryl oder Aralkyl oder Heteroatomen bzw. Heteroatome-haltigen Gruppen wie Halogenen oder Halogen-haltigen Gruppen. Des Weiteren werden unter Alkyl- im Sinne der vorliegenden Anmeldung auch Alkoxygruppen verstanden, die die vorstehend erwähnten Alkylreste aufweisen. Weiterhin werden unter Alkyl Oxymethylen- und Oxyethylen-Derivate, die bevorzugt oligomer sind, verstanden, zum Beispiel Gruppen der Formel -(CH₂CH₂)ₙ OCH₃, wobei n eine ganzzahlige Variable von 1 bis 100 , bevorzugt 1 bis 10, besonders bevorzugt 1 bis 5 bedeutet.

Bevorzugte Alkylgruppen im Sinne der vorliegenden Anmeldung sind Ethyl, i-Propyl und n-Butyl, sofern nicht in der folgenden Beschreibung ausdrücklich andere Alkylgruppen erwähnt sind.

Unter Alkenyl sind im Sinne der vorliegenden Anmeldung Gruppen zu verstehen, die linear oder verzweigt sein können und 2 bis 20, bevorzugt 2 bis 8, besonders bevorzugt 2 bis 6, ganz besonders bevorzugt 2 bis 4 Kohlenstoffatome aufweisen. Die Kohlenstoffketten der Alkenylgruppen können des Weiteren durch Heteroatome unterbrochen sein, zum Beispiel durch O oder NR⁶, wobei R⁶ bereits vorstehend definiert wurde. Die Alkenylgruppen können des Weiteren mit den bezüglich der Alkylgruppen genannten. Gruppen substituiert sein.

Geeignete Alkenylgruppen sind beispielsweise Butenyl, Hexenyl, Octenyl in allen isomeren Formen.

Unter Cycloalkyl im Sinne der vorliegenden Anmeldung sind substituierte und unsubstituierte Cycloalkylgruppen mit 3 bis 20, bevorzugt 3 bis 12, besonders bevorzugt 3 bis 6 Kohlenstoffatomen in dem cyclischen Grundgerüst zu verstehen. Geeignete Substituenten der Cycloalkylgruppen sind die vorstehend bezüglich der Alkylgruppen genannten Substituenten. Es ist des Weiteren möglich, dass ein oder mehrere Kohlenstoffatome des cyclischen Grundgerüsts durch Heteroatome oder Heteroatom-haltige Gruppen, zum Beispiel O, S oder NR⁶, wobei R⁶ bereits vorstehend definiert wurde, ersetzt sind. Geeignete Cycloalkylgruppen sind beispielsweise 1-Cyclooctyl, 1-Cycloheptyl, 1-Cyclohexyl, 1-Cyclopentyl, 1-Methyl-cyclopentyl, 1-Methyl-cyclohexyl, 1-Methyl-4-i-propylcyclohexyl, bevorzugt 1-Cyclopentyl, 1-Cyclohexyl und 1-Cyclooctyt.

Als Arylgruppen sind im Sinne der vorliegenden Anmeldung substituierte und unsubstituierte Arylgruppen geeignet. Bevorzugt weisen die Arylgruppen 6 bis 24, besonders bevorzugt 6 bis 12 Kohlenstoffatome im Grundgerüst auf unter Arylgruppen sind auch solche Gruppen zu verstehen, in denen zwei oder mehr Arylgruppen über eine oder mehrere Einfachbindungen verknüpft sind, zum Beispiel Diphenyl. Geeignete Substituenten sind bereits vorstehend bezüglich der Alkylreste genannt. Eines oder mehrere der Kohlenstoffatome des Grundgerüsts können durch Heteroatome, zum Beispiel O, S oder N, ersetzt sein. Bevorzugte Arylgruppen sind Phenyl und Diphenyl.

Geeignete Aralkylgruppen im Sinne der vorliegenden Anmeldung sind substituierte oder unsubstituierte Aralkylgruppen mit 7 bis 20, bevorzugt 7 bis 18, besonders bevorzugt 7 bis 14 Kohlenstoffatomen im Aralkylrest. Es ist möglich, dass eine oder mehrere der Kohlenstoffatome im Arylrest des Aralkylrests oder im Alkylrest des Aralkylrests durch Heteroatome oder heteroatomhaltige Gruppen, zum Beispiel O oder NR⁶, wobei R⁶ bereits vorstehend definiert wurde, ersetzt sind. Des Weiteren können die Aralkylgruppen mit den bezüglich der Alkylgruppen genannten Substituenten substituiert sein. Geeignete Aralkylgruppen sind beispielsweise m/p-Phenylethyl oder Benzyl, m/p-Toluyl und i-Xylyl.

Unter 2- oder polyvalenten aromatischen Resten sind im Sinne der vorliegenden Anmeldung substituierte oder unsubstituierte Reste zu verstehen, die Heteroatome enthalten können. Als Substituenten sind die vorstehend bezüglich der Alkylreste genannten Substituenten geeignet. Geeignete Heteroatome sind zum Beispiel N, O oder S. Bevorzugte Reste sind 2-valente aromatische Reste. Besonders bevorzugte Reste sind nachstehend bezüglich der Definition von R¹ und R⁵ genannt.

In einer bevorzugten Ausführungsform bedeuten R² und R³ in den polymeren aromatischen Phosphonaten, die Einheiten der Formel I aufweisen, unabhängig voneinander Methyl, Ethyl, n-Propyl, i-Propyl, n-Butyl, 1-(But-3-enyl), s-Butyl, t-Butyl, 1-Pentyl, t-Pentyl, 1-Hexyl, 1-Octyl, i-Octyl, t-Octyl, 2-Ethylhexyl, 1-Cyclooctyl, 1-Cycloheptyl, 1-Cyclohexyl, 1-Cyclopentyl, 1-Methylcyclopentyl, 1-Methyl-cyclohexyl, 1-Methyl-4-i-propylcyclohexyl, Nonyl, Decyl, Undecyl, Dodecyl, Tridecyl, Tetradecyl, Pentadecyl, Hexadecyl, Heptadecyl, Octadecyl, Nonadecyl, Eicosyl, 1,4-Tetramethylen, -(CH₂CH₂)ₙOCH₃, wobei n 1 bis 100, bevorzugt 1 bis 10, besonders bevorzugt 1 bis 5 bedeutet. Besonders bevorzugt bedeuten R² und R³ unabhängig voneinander C₁- bis C₈-Alkyl, ganz besonders bevorzugt C₁- bis C₄-Alkyl, insbesondere bevorzugt Ethyl, Butyl. Insbesondere bevorzugt haben R² und R³ dieselbe Bedeutung.

R¹ und R⁵ bedeuten unabhängig voneinander in einer bevorzugten Ausführungsform einen 2-valenten aromatischen Rest, der substituiert oder unsubstituiert sein kann und gegebenenfalls Heteroatome enthalten kann. Besonders bevorzugt bedeuten R¹ und R⁵ unabhängig voneinander Arylen, zum Beispiel 1,4-Phenylen, 1,3-Phenylen, 1,2-Phenylen, 1,6-Naphthylen, 2,4-Naphthylen, 2,6-Carbazol, 3-Phenyl-1,4-Arylen, 3-Alkyl-1,4-arylen, 2-Alkyl-1,4-arylen, 2-Alkoxy-1,4-arylen, 3-Alkoxy-1,4-arylen, 2,4-Dimethyl-1,4-phenylen, 2,3,5,6-Tetramethyl-1,4-phenylen, 4,4'-Biphenylen, 3,3'-Diphenyl-4,4'-biphenylen oder Arylenalkylen, zum Beispiel 2,2'-lsopropyliden-bis(1,4-phenylen). Geeignete Alkylreste im Sinne der vorliegenden Anmeldung sind bereits vorstehend genannt. Geeignete Alkoxyreste sind solche, die die vorstehend genannten Alkylreste enthalten. Bevorzugte Alkylreste in den als R¹ und R⁵ geeigneten Gruppen sind C₁- bis C₄-Alkylreste, besonders bevorzugt t-Butylreste. Ganz besonders bevorzugt sind die 2-valenten aromatischen Reste unsubstituiert. Besonders bevorzugte Reste R¹ und R⁵ sind 1,4-Phenylen 1,3-Phenylen, 1,2-Phenylen, 2,2'-Isopropyliden-bis(1,4-phenylen), 4,4'-Biphenylen, 3,3'-Diphenyl-4,4'-biphenylen.

Die polymeren aromatischen Phosphonate weisen in einer bevorzugten Ausführungsform ausschließlich Einheiten der Formel (I) auf.

Hat Y in den polymeren aromatischen Phosphonaten, die Einheiten der Formel I aufweisen, die Bedeutung Carbonyl, und ist o ungleich 0, so handelt es sich bei den polymeren aromatischen Phosphonaten, die Einheiten der Formel I aufweisen, um Homo- oder Copolyarylenketone.

Bedeutet Y in den Einheiten der Formel I Sulfonyl, und ist o ungleich 0, handelt es sich bei den polymeren aromatischen Phosphonaten um Homo- oder Copolyarylensulfone.

Sind des Weiteren m und/oder s in den Einheiten der Formel I von 0 verschieden, handelt es sich um Copolyarylensulfone bzw. Copolyarylenketone mit einer oder mehreren aromatischen Arylenether-Einheiten.

Sind m, o und s 0, handelt es sich bei den polymeren aromatischen Phosphonaten, die Einheiten der Formel I aufweisen, um Derivate von Homo- und Copolyarylenen.

Bedeutet nur o 0 und sind s und m von 0 verschieden, so handelt es sich bei den polymeren aromatischen Phosphonaten, die Einheiten der Formel I aufweisen, um Copolyarylenether.

n, q und t bedeuten die jeweilige Anzahl von Phosphonatgruppen an den aromatischen Resten R¹ bzw. R⁵. In einer bevorzugten Ausführungsform bedeuten n, q und t unabhängig voneinander 0 bis 4, bevorzugt 0 bis 1, mit der Maßgabe, dass n, q und t nicht gleichzeitig 0 bedeuten.

p bedeutet in einer bevorzugten Ausführungsform 0 bis 4, besonders bevorzugt 0 bis 2.

Unter polymeren aromatischen Phosphonaten sind dabei im Sinne der vorliegenden Anmeldung bevorzugt solche polymeren aromatischen Phosphonate zu verstehen, die ein gewichtsmittleres Molekulargewicht M_{w} von im Allgemeinen 60 000 g/mol, bevorzugt mindestens 20 000 g/mol, besonders bevorzugt mindestens 30 000 g/mol, ganz besonders bevorzugt von 30 000 bis 90 000 aufweisen. Das Molekulargewicht wird durch Gelpermeationschromatographie an Polystyrolstandard ermittelt.

Der Funktionalisierungsgrad des polymeren aromatischen Phosphonats gemäß der vorliegenden Anmeldung beträgt im Allgemeinen mindestens 30%, bevorzugt mindestens 50%, besonders bevorzugt mindestens 75%, ganz besonders bevorzugt mindestens 100%, weiter bevorzugt mindestens 150%. Dabei bedeutet ein Funktionalisierungsgrad von mindestens 30%, dass mindestens 30% der Repetiereinheiten der als Ausgangssubstanzen eingesetzten Polyarylenverbindungen, bevorzugt der Polyarylenverbindungen der nachstehend genannten Formel IV, mit Phosphonsäuregruppen, bevorzugt mit Gruppen der Formel -P(=O)(OR²)(OR³), wobei R² und R³ die vorstehend genannten Bedeutungen aufweisen, substituiert sind. Bevorzugt sind mindestens 50%, besonders bevorzugt mindestens 75%, ganz besonders bevorzugt mindestens 100%, weiter bevorzugt mindestens 150% der Repetitiereinheiten mit Phosphonsäuregruppen, bevorzugt mit Gruppen der Formel -P(=O)(OR²)(OR³), wobei R² und R³ die vorstehend genannten Bedeutungen aufweisen, substituiert. Eine Funktionalisierung von 150% bedeutet dabei eine 1,5-fache Funktionalisierung der jeweiligen Repetitiereinheiten der Polyarylenverbindungen, insbesondere der Polyarylenverbindungen der allgemeinen Formel IV. Grundsätzlich kann der Funktionalisierungsgrad so hoch gewählt werden, so lange die Löslichkeit der polymeren aromatischen Phosphonate in geeigneten Lösungsmitteln gewährleistet ist. Geeignete Lösungsmittel sind nachstehend erwähnt.

Besonders bevorzugte polymere aromatische Phosphonate basieren auf polymeren aromatischen Verbindungen (Polyarylenverbindungen) ausgewählt aus der Gruppe bestehend aus Polysulfonen, Polyethersulfonen, Polyetherketonen, Polyetheretherketonen, Polyetherketonketonen, Polyarylenoxiden, Polyarylensulfiden, Polyimiden, Polybenzimidazolen, Polyoxadiazolen, Polytriazolen und Polyphosphazenen. Besonders bevorzugte polymere aromatische Verbindungen sind Polysulfone, Polyethersulfone, Polyetherketone, Polyetheretherketone und Polyetherketonketone. Die vorstehend genannten Polyarylenverbindungen und deren Herstellungsverfahren sind dem Fachmann bekannt. Teilweise sind die vorstehend genannten Polyarylenverbindungen kommerziell erhältlich. Beispiele für kommerziell erhältliche geeignete Polyarylenverbindungen sind Poly(ethersulfon) (ULTRASON^{®} E, worin Y=SO₂, R¹=Ph, m, o, p=₁, v=0 und r=1 bedeuten), Poly(sulfon) (ULTRASON^{®} S, worin Y=SO₂*,* R¹=Ph, m, o, p, r, v=1 und R⁵=2,2'-Isopropyliden-bis(1,4-phenylen) bedeuten), Poly(phenylsulfon) (RADEL^{®} R5000, worin Y=SO₂, R¹=Ph, m, o, p, r, v=1 und R⁵=4,4'-Biphenyl bedeuten) sowie Poly(etherketon) (VICTREX^{®} 450 P, worin Y=CO, R¹ und R⁵=Ph und m, o, p, r und v=1 bedeuten).

Die polymeren aromatischen Phosphonate werden gemäß dem erfindungsgemäßen Verfahren durch Reaktion von halogenierten Polyarylenverbindungen mit Phosphorigsäureestern erhalten.

Die halogenierten Polyarylenverbindungen weisen im Allgemeinen Einheiten der allgemeinen Formel II auf:

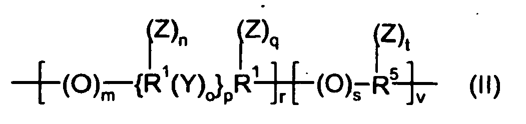

Die Symbole und Reste in Formel II haben dieselben Bedeutungen wie die entsprechenden Symbole und Reste in Formel I.

Z in Formel II bedeutet Halogen, bevorzugt Br, oder I, besonders bevorzugt Br.

Bevorzugte Ausführungsformen der halogenierten Polyarylenverbindungen, die Einheiten der Formel II aufweisen, entsprechen den bevorzugten Ausführungsformen der vorstehend genannten polymeren aromatischen Phosphonaten, mit dem Unterschied, dass anstelle der Gruppe X in den aromatischen Phosphonate die Gruppe Z in den halogenierten Polyarylenverbindungen vorliegt.

In dem erfindungsgemäßen Verfahren werden Phosphorigsäureester zur Umsetzung mit den halogenierten Polyarylenverbindungen eingesetzt. Bevorzugt werden Alkylester der Phosphorigsäure eingesetzt, die besonders bevorzugt die allgemeine Formel III aufweisen:

P(OR²)(OR³)(OR⁴) (III)

worin bedeuten:
- R², R³: unabhängig voneinander die vorstehend bezüglich der Reste R² und R³ in Formel I genannten Bedeutungen,
- R⁴: unabhängig von R² und R³ die für R² und R³ genannten Bedeutungen.

In einer besonders bevorzugten Ausführungsform weisen die Reste R², R³ und R⁴ dieselben Bedeutungen auf. Ganz besonders bevorzugt werden Triethylphosphit und Tributylphosphit eingesetzt.

Die in dem erfindungsgemäßen Verfahren eingesetzten Katalysatoren weisen mindestens ein Metall ausgewählt aus der Gruppe bestehend aus Nickel, Palladium, Platin, Rhodium, Ruthenium, Osmium und Iridium auf. Bevorzugt enthält der eingesetzte Katalysator Nickel und/oder Palladium. Nickel und Palladium können dabei in den Oxidationsstufen 0 bis +2 vorliegen, das heißt es werden entweder Nickel- und/oder Palladiumsalze eingesetzt oder Komplexe des Nickels und/oder Palladiums.

Geeignete Salze des Nickels und/oder Palladiums sind Halogenide, bevorzugt Chloride, Bromide oder lodide, besonders bevorzugt Chloride, Pseudohalogenide, bevorzugt Cya- . nide, OCN, SCN, besonders bevorzugt Cyanide, β-Diketonate, bevorzugt Acetylacetonate. Bevorzugte Salze des Nickels sind Nickel(II)-Salze.

Werden Nicket(0)-Komplexe eingesetzt, sind Ni[CO]₄, Ni[P(OR)₃]₄ mit R gleich einem linearen oder verzweigten C₁-C₂₀-Alkylrest, bevorzugt Ethyl, wie beilspielsweise in J. Org. Chem. 1980, 45, 5426 bis 5429 offenbart, bevorzugt.

Als Pd-(0)-Komplexe sind beispielsweise Triphenylphosphin-Komplexe oder Dibenzylidenacetonate geeignet. Beispiele sind Tetrakis-(triphenylphosphin)-Palladium oder Tris(dibenzylidenaceton)-Palladium.

In einer bevorzugten Ausführungsform des erfindungsgemäßen Verfahrens wird ein Katalysator eingesetzt, der Nickel enthält, bevorzugt Ni(0) oder Ni(II), insbesondere ein Katalysator, der Nickel in Form eines Nickel(II)-Salzes, enthält. Geeignete Salze sind bereits vorstehend genannt. Besonders bevorzugt wird als Katalysator in dem erfindungsgemäßen Verfahren ein Nickel(II)-Halogenid, insbesondere NiCl₂, eingesetzt.

Das erfindungsgemäße Verfahren zeichnet sich insbesondere dadurch aus, dass bereits bei geringen Mengen eingesetzten Katalysators eine vollständige Umsetzung der halogenierten Polyarylenverbindungen zu den polymeren aromatischen Phosphonaten erzielt werden kann, wobei im allgemeinen halogenfreie polymere aromatische Phosphonate erhalten werden. Bevorzugt wird der Katalysator in dem erfindungsgemäßen Verfahren in einer Menge von 0,05 bis < 1 molaren Äquivalenten, besonders bevorzugt 0,05 bis 0,5 molaren Äquivalenten, ganz besonders bevorzugt 0,05 bis 0,1 molaren Äquivalenten, jeweils bezogen auf die Menge der molaren Äquivalente des Halogens in den eingesetzten halogenierten Polyarylenverbindungen, eingesetzt. Liegt das molare Katalysator-Halogen-Verhältnis unter 0,05, ist ein vollständiger Bromumsatz nicht gesichert.

Als Lösungsmittel wird erfindungsgemäß ein stickstofffreies Lösungsmittel eingesetzt. Dieses stickstofffreie Lösungsmittel kann ein einzelnes Lösungsmittel oder ein Gemisch verschiedener Lösungsmittel sein. Bevorzugt weist das stickstofffreie Lösungsmittel oder die Mischung von stickstofffreien Lösungsmitteln einen Siedepunkt oberhalb von 150 °C auf. Geeignete Lösungsmittel sind ausgewählt aus der Gruppe bestehend aus Diphenylethern, Benzophenon, Diphenylsulfon, den Alkyl- oder Alkoxy-substituierten Derivaten dieser Verbindungen, insbesondere den Methyl-, Ethyl-, Propyl-, Butyl-, Methoxy-, Ethoxy-Propoxy-, Butoxy-substituierten Derivaten, aliphatischen, teilaromatischen, aromatischen Oligo- und Polyethern, aliphatischen, teilaromatischen, aromatischen β-Diketonen, zum Beispiel Acetylaceton, Acetylbenzophenon und 1,34-Diphenyl-propan-1,3-dion, den Alkyl-, Alkoxy-, Aryl- sowie Aryloxy-substituierten Derivaten dieser Verbindungen, aliphatischen, teilaromatischen, aromatischen Ketoethem, den Alkyl-, Alkoxy-, Aryl-, Aryloxy-substituierten Derivaten dieser Verbindungen, aliphatischen, teilaromatischen, aromatischen Carbonsäureestem sowie aliphatischen, teilaromatischen, aromatischen Carbonaten, Alkyl-, Alkoxy-, Aryl- sowie Aryl-oxysubstituierten Derivaten dieser Verbindungen, und Mischungen der vorstehend genannten Lösungsmittel. Bevorzugt werden als Lösungsmittel Benzophenon, Diphenylether und Diphenylsulfon, bzw. Dimethyl, Ethyl, Propyl-, Butyl-, Methoxy-, Ethoxy-, Propoxy-, Butoxy-substituierten Derivate dieser Verbindungen eingesetzt. Ganz besonders bevorzugt werden Diphenylether und Benzophenon eingesetzt.

Die Reaktionstemperatur in dem erfindungsgemäßen Verfahren beträgt erfindungsgemäß 150 bis 250°C. Bevorzugt wird das erfindungsgemäße Verfahren bei Temperaturen von 170 bis 250°C durchgeführt, besonders bevorzugt bei Temperaturen von 190 bis 250°C:

Im Allgemeinen werden die gemäß dem erfindungsgemäßen Verfahren hergestellten polymeren aromatischen Phosphonate in dem erfindungsgemäßen Verfahren in Form von Mischungen erhalten, enthaltend 0,1 bis 90 Gew.-% einer oder mehrerer polymerer aromatischer Phosphonate, die gemäß dem erfindungsgemäßen Verfahren hergestellt wurden, und 10 bis 99,9 Gew.% eines stickstofffreien Lösungsmittels, bevorzugt eines stickstoffreien Lösungsmittels wie vorstehend definiert.

Bevorzugt beträgt der Anteil an polymeren aromatischen Phosphonaten in den erhaltenen Mischungen maximal 90 Gew.%, besonders bevorzugt maximal 80 Gew.-%, ganz besonders bevorzugt maximal 75 Gew.-%.

Für den Einsatz als Membranmaterial für Brennstoffzellen oder andere Anwendungen wird das mit Hilfe des erfindungsgemäßen Verfahrens erhaltene polymere aromatische Phosphonat im Allgemeinen zu der entsprechenden polymeren Phosphonsäure gespalten (Esterspaltung). Es ist grundsätzlich ebenfalls möglich, das erfindungsgemäße polymere aromatische Phosphonat als Membranmaterial, insbesondere in Mischungen (Blends) mit anderen Membranmaterialien, einzusetzen.

Die Esterspaltung der polymeren aromatischen Phosphonate kann gemäß allen dem Fachmann bekannten Verfahren durchgeführt werden. In einer bevorzugten Ausführungsform erfolgen die Reinigung des polymeren aromatischen Phosphonats und die Esterspaltung zu einer gereinigten polymeren Phosphonsäure in dem gleichen Schritt. Die Reinigung und gleichzeitige Esterspaltung kann zum Beispiel durch Lösen des gemäß dem erfindungsgemäßen Verfahren hergestellten polymeren aromatischen Phosphonats in einem Lösungsmittel, zum Beispiel Tetrahydrofuran oder Aceton, und Fällung in Alkohol, erzielt werden, wobei der Alkohol bevorzugt mit 0,1 bis 5 Vol.-% einer starken Mineralsäure wie HCl, HBr oder HNO₃ angesäuert ist.

Eine bevorzugte Ausführungsform der Produktaufarbeitung und Esterspaltung ist nachstehend ausgeführt:

In einer bevorzugten Ausführungsform erfolgt die erfindungsgemäße Phosphonylierung indem die halogenierte, besonders bevorzugt bromierte Polyarylenverbindung mit dem erfindungsgemäß eingesetzten Katalysator, bevorzugt einem Nickel-Katalysator, besonders bevorzugt Nickel(II)-Halogenid, bevorzugt in der vorstehend genannten Menge, in einem Reaktor, zum Beispiel einen Glasreaktor, vorgelegt wird und bei den vorstehend genannten Temperaturen durch Überleiten eines Stickstoffstroms, bevorzugt für eine Dauer von 2 bis 4 Stunden, von Restfeuchte befreit wird. In einer bevorzugten Ausführungsform wird der Stickstöffstrom während der gesamten Reaktionsdauer beibehalten, um die Entfernung flüchtiger Reaktionsprodukte zu gewährleisten. Nach Zugabe der gewünschten Menge des erfindungsgemäß eingesetzten stickstofffreien Lösungsmittels wird, bevorzugt durch Rühren bei der vorstehend genannten Temperatur, eine homogene Lösung erzeugt. Der Ansatz wird bevorzugt auf eine höhere Temperatur erwärmt und der Phosphorigsäureester, bevorzugt der Phosphorigsäurealkylester, besonders bevorzugt Triethylphosphit oder Tributylphosphit, wird zugetropft, so dass die gesamte Menge in einem Zeitraum von 15 bis 30 Minuten dem Ansatz zugeführt wird und dieser während der ganzen Zeit eine homogene Beschaffenheit aufweist. Die Zutropfzeit ist dabei grundsätzlich variabel und von der Ansatzgröße abhängig, d.h. sie kann in einigen Fällen mehr oder weniger als 15 bis 30 Minuten betragen. Zum Start der Umsetzung kann die Reaktionsmischung gegebenenfalls weiter innerhalb der vorstehend angegebenen Temperaturen erwärmt werden. Nach einem Zeitraum von im Allgemeinen 1 bis 4 Stunden wird das Reaktionsgemisch etwa auf die Ausgangstemperatur oder eine geringfügig tiefere Temperatur abgekühlt und bei dieser Temperatur im Allgemeinen weitere 4 bis 12 Stunden gehalten.

Nach Beendigung der Reaktion wird die Reaktionsmischung in ein niedrigsiedendes Lösungsmittel, zum Beispiel Tetrahydrofuran oder Aceton, aufgenommen und durch Fällung in im Allgemeinen Alkohol, bevorzugt Methanol, von Lösungsmitteln, Reaktionsrückständen sowie vom Katalysator befreit. Die hierzu eingesetzte Alkoholmenge beträgt im Allgemeinen das 3- bis 20-fache des Ansatzgewichtes. Die Katalysatorabtrennung kann dadurch verbessert werden, dass das Alkoholysebad mit im Allgemeinen 0,1 bis 5 Vol.-% einer starken Mineralsäure, bevorzugt HCl, HBr oder HNO₃, angesäuert wird. Üblicherweise wird der Alkohol nach 30 bis 120-minütigem Einwirken ausgetauscht und das Vorgehen wird mehrfach, bevorzugt 3- bis 10-fach wiederholt. Die Reinigungs- und Alkoholyse-Schritte können durch gleichzeitiges Einwirken von Ultraschall oder durch Soxhlet-Extraktion des Ansatzes für einen Zeitraum von im Allgemeinen 12 bis 48 Stunden mit einem schwach sauren Alkohol, insbesondere Methanol, intensiviert werden. Alternativ kann das erhaltene Reaktionsprodukt durch wiederholtes Lösen und Fällen des Reaktionsproduktes in geeigneten Löse- und aciden Fällungsmitteln gereinigt werden.

Die erhaltene gereinigte polymere Phosphonsäure wird durch Trocknen von dem eingesetzten Extraktionsmittel befreit. Die Trocknung erfolgt im Allgemeinen bei 50 bis 100°C im Vakuum.

Ein weiterer Gegenstand der vorliegenden Erfindung ist somit ein Verfahren zur Herstellung von polymeren aromatischen Phosphonsäuren umfassend die Schritte:
a) Reaktion von halogenierten Polyarylenverbindungen mit Phosphorigsäureestern in Anwesenheit eines Katalysators enthaltend mindestens ein Metall ausgewählt aus der Gruppe bestehend aus Ni, Pd, Pt, Rh, Ru, Os und Ir, wobei die Reaktion in einem stickstofffreien Lösungsmittel bei Temperaturen von 150 bis 250°C erfolgt, wobei polymere aromatische Phosphonate erhalten werden;
b) Esterspaltung der polymeren aromatischen Phosphonate.

Die Esterspaltung in Schritt b) kann nach dem Fachmann bekannten Verfahren erfolgen, zum Beispiel durch Acidolyse oder Silylolyse. In einer bevorzugten Ausführungsform erfolgen die Reinigung des in Schritt a) erhaltenen polymeren aromatischen Phosphonats und die Esterspaltung gleichzeitig. Ein bevorzugtes Verfahren zur gleichzeitigen Reinigung und Esterspaltung ist vorstehend genannt.

Bevorzugte Ausführungsformen von Schritt a) des erfindungsgemäßen Verfahrens zur Herstellung von polymeren aromatischen Phosphonaten sind die vorstehend bezüglich des Verfahrens zur Herstellung von polymeren aromatischen Phosphonaten genannten Ausführungsfomien.

Die als Ausgangsprodukte in dem erfindungsgemäßen Verfahren eingesetzten halogenierten Polyarylenverbindungen können aus den entsprechenden polymeren aromatischen Verbindungen durch dem Fachmann bekannte Verfahren hergestellt werden. Geeignete Verfahren sind zum Beispiel in DE-A 101 48 131 und US 6,828,407 B2 genannt. Bevorzugt erfolgt- die Herstellung der halogenierten Polyarylenverbindungen durch Umsetzung der entsprechenden Polyarylenverbindungen mit einem Halogenierungsmittel. Bevorzugte Polyarylenverbindungen weisen Einheiten der allgemeinen Formel IV auf 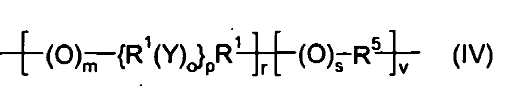 wobei die Symbole und Reste die vorstehend bezüglich der Definitionen in Formel I genannten Bedeutungen aufweisen.

Bevorzugte Ausführungsformen der genannten Reste und Symbole sind ebenfalls vorstehend genannt.

Die Halogenierung der Verbindungen der Formel IV erfolgt im Allgemeinen bei einer Temperatur von -20 bis 140°C, bevorzugt 20 bis 140°C, besonders bevorzugt 25 bis 100°C. Die Halogenierung wird üblicherweise in einem inerten Lösungsmittel durchgeführt. Geeignete inerte Lösungsmittel sind beispielsweise Alkylcarbonsäuren, chlorierte Kohlenwasserstoffe, anorganische Säuren wie Schwefelsäure, Alkylsulfonsäuren oder Mischungen davon.

Geeignete Halogenierungsmittel sind dem Fachmann bekannt. Bevorzugt wird eine Bromierung oder lodierung durchgeführt. Bevorzugte Bromierungsmittel sind elementares Brom und N-Brom-Verbindungen wie N-Bromsuccinimid oder Dibromisocyanursäure.

Durch die Dauer der Einwirkzeit des eingesetzten Halogenierungsmittels, das molare Verhältnis von Halogenierungsmittel zu Polymer und die Temperatur kann der gewünschte Halogenierungsgrad gesteuert werden. Im Allgemeinen wird ein Halogenierungsgrad von 50 bis 200 %, bevorzugt 75 bis 175, besonders bevorzugt 75 bis 125 eingestellt.

Der Halogenierungsgrad, insbesondere der Bromierungsgrad, kann mit Hilfe konventioneller Methoden, zum Beispiel über die Auswage, über NMR-Spektroskopie oder über Elementaranalyse bestimmt werden. Diese Methoden sind dem Fachmann bekannt.

Im Folgenden sind Verfahren zur Bromierung verschiedener Polyarylenverbindungen der Formel (IV) exemplarisch dargestellt:

Eine Polyarylenverbindung mit Y = SO₂ und v ≠ 0, zum Beispiel Poly(sulfon) zum Beispiel (ULTRASON^{®} S) kann zum Beispiel in chlorierten Kohlenwasserstoffen wie Methylenchlorid, Chloroform, Dichlorethan, Trichlorethan oder Tetrachlorethan, besonders bevorzugt Chloroform, gelöst werden. Die Bromierung erfolgt anschließend durch Zugabe von in einem inerten Lösungsmittel verdünntem elementarem Brom und Rühren bei Raum- bis Refluxtemperatur des Lösungsmittels. Der Bromierungsgrad kann durch Einstellen eines bestimmten molaren Brom-Polymer-Verhältnisses, die Reaktionstemperatur und durch die Reaktionsdauer kontrolliert werden. Zur Beendigung der Reaktion wird die Reaktionsmischung in einem Lösungsmittel, in dem das erhaltene Polymer unlöslich ist, wie Aceton, Methanol, i-Hexan oder Mischungen davon gefällt, mechanisch zerkleinert und mit einem aliphatischen Alkohol, bevorzugt einem C₁- bis C₆-Alkohol, besonders bevorzugt Methanol auf einer Base, bevorzugt Alkalihydroxid, besonders bevorzugt Kaliumhydroxid, durch Extraktion für im Allgemeinen 24 Stunden gereinigt.

Eine polymere aromatische Verbindung der Formel IV, worin m, p, q und o 1 bedeuten, v = o ist und R¹ Phenyl bedeutet, zum Beispiel ULTRASON^{®} E erfolgt bevorzugt in konzentrierter Schwefelsäure als Lösungsmittel. Als Bromierungsmittel wird eine N-Brom-Verbindung, zum Beispiel N-Bromsuccinimid (Chem. Rev., 60, 16, 271 bis 317, 1984) oder Dibromoisocyanursäure (Monatshefte für Chemie, 99, 815 bis 822, 1968) in Form einer Lösung im gleichen Lösungsmittel eingesetzt. Die Bromierung erfolgt unter Rühren der Mischung bei Temperaturen von im Allgemeinen 0 bis 50°C für einen Zeitraum von im Allgemein 1 bis 24 Stunden. Zu Aufarbeitung wird der Ansatz im Allgemein in einen 2- bis 20-fachen Überschuss destillierten Wassers gefällt, mechanisch zerkleinert und nach weiterem Waschen mit destilliertem Wasser durch Extraktion mit einem aliphatischen Alkohol, bevorzugt einem C₁-C₆-Alkohol, besonders bevorzugt Methanol, auf einer Base, bevorzugt Alkalihydroxid, besonders bevorzugt Kaliumhydroxid, für im Allgemeinen 12 bis 48 Stunden gereinigt.

Wird eine polymere aromatische Verbindung der Formel IV eingesetzt, worin Y = CO bedeutet, zum Beispiel Poly(etheretherketon) (z. B. VICTREX^{®} 450 P), werden zunächst Lösungen durch Rühren des Polymers in Alkylsulfonsäuren, wie Methan-, Ethan- und Propansulfonsäure, bevorzugt Methansulfonsäure, bei Temperaturen von ≤ 100°C, bevorzugt 50 bis 100°C, hergestellt. Die Bromierung kann durch Zugabe einer bestimmten Menge einer N-Brom-Verbindung wie N-Bromsuccinimid oder Dibromoisocyanursäure in Form einer Lösung im gleichen Lösungsmittel und Rühren bei Temperaturen von im Allgemeinen 0 bis 100°C für einen Zeitraum von im Allgemeinen 1 bis 24 Stunden durchgeführt werden. Zur Aufarbeitung wird die Reaktionsmischung bevorzugt in einen großen Überschuss destillierten Wassers gefällt, mechanisch zerkleinert und nach weiterem Waschen mit destilliertem Wasser, üblicherweise in großen Mengen, durch Extraktion mit einem aliphatischen Alkohol, bevorzugt einem C₁-C₆-Alkohol, besonders bevorzugt Methanol, auf einer Base, bevorzugt Alkalihydroxid, besonders bevorzugt Kaliumhydroxid, für im Allgemeinen 12 bis 48 Stunden gereinigt.

In einer weiteren Ausführungsform betrifft die vorliegende Erfindung daher ein Verfahren zur Herstellung von polymeren aromatischen Phosphonaten umfassend die Schritte:
i) Halogenierung einer Polyarylenverbindung, wobei eine halogenierte Polyarylenverbindung erhalten wird,
ii) Umsetzung der halogenierten Polyarylenverbindung mit Phosphorigsäureestem in Anwesenheit eines Katalysators enthaltend mindestens ein Metall ausgewählt aus der Gruppe bestehend aus Ni, Pd, Pt, Rh, Ru, Os und Ir, wobei die Reaktion in einem stickstofffreien Lösungsmittel bei Temperaturen von 150°C bis 250°C erfolgt.

Bevorzugte Ausführungsformen der Schritte i) und ii) sowie in diesen Schritten eingesetzte und erhaltene bevorzugte Verbindungen sind bereits vorstehend genannt.

Im Gegensatz zu den gemäß den Verfahren im Stand der Technik hergestellten polymeren aromatischen Phosphonaten zeichnen sich die gemäß dem erfindungsgemäßen Verfahren hergestellten Phosphonate dadurch aus, dass sie halogenfrei sind. Aus diesen Phosphonaten hergestellte Phosphonsäuren eignen sich daher für den Einsatz in Brennstoffzellen. Dafür ist es wichtig, dass die eingesetzten polymeren aromatischen Phosphonsäuren keine halogenhaltigen Verunreinigungen bzw. Reste nicht umgesetzter Halogenaryl-Vorstufen enthalten. Halogenhaltige Reste können bei dem Einsatz in Brennstoffzellen mit Wasserstoff an Pt-Kontakten beim Betrieb der Brennstoffzellen Halogenwasserstoffe bilden, die als starke Säuren die Korrosion der Brennstoffzelle bewirken können. Eine Entfernung der Bromsubstituenten durch reduktive Dehalogenierung kann des Weiteren zeitlich veränderliche Materialeigenschaften, zum Beispiel Spannungsrisse durch Schrumpfung des Membranmaterials, hervorrufen. Des Weiteren sind durch das erfindungsgemäße Verfahren solche polymeren aromatischen Phosphonate sowie Phosphonsäuren zugänglich, bei denen nicht nur die an elektronenreiche Ethersegmente der halogenierten Polyarylenverbindungen gebundenen Halogengruppen mit den Phosphorigsäureestem umgesetzt werden, sondern ebenfalls die weniger reaktiven Halogengruppen, die an die weiteren 2- oder polyvalenten aromatischen Reste gebunden sind. Dies sind in den bevorzugten Verbindungen der Formel I die Reste, die dem Y-Rest benachbart sind.

Ein weiterer Gegenstand der vorliegenden Erfindung sind daher polymere aromatische Phosphonate hergestellt nach dem erfindungsgemäßen Verfahren sowie polymere aromatische Phosphonsäuren, die durch Hydrolyse der entsprechenden erfindungsgemäßen aromatischen Phosphonate erhalten werden, wie vorstehend ausgeführt.

Die erfindungsgemäßen aromatischen Phosphonsäuren weisen bevorzugt die allgemeine Formel V auf

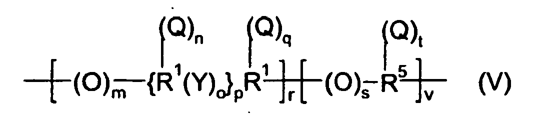

Die Symbole und Reste haben darin dieselbe Bedeutung wie die entsprechenden Symbole und Reste in Formel I.

Die Gruppe Q in Formel V bedeutet -P=O(OH)2.

Bevorzugte Ausführungsformen der erfindungsgemäßen Phosphonsäuren entsprechen solchen Phosphonsäuren, die die vorstehend bezüglich Formel I genannten bevorzugten und besonders bevorzugten Reste und Gruppen aufweisen. Bevorzugte Molmassen der erfindungsgemäßen Phosphonsäuren entsprechen denen der entsprechenden Phosphonate.

Die erfindungsgemäßen polymeren aromatischen Phosphonsäuren, insbesondere solche, die Einheiten der Formel V enthalten, können zur Herstellung von Membranen, Filmen, Composit- oder Verbundmaterialien eingesetzt werden. Bevorzugt werden die erfindungsgemäßen polymeren aromatischen Phosphonsäuren zur Herstellung von Membranen eingesetzt. Diese Protonen-leitenden Membranen können als Membranen in Brennstoffzellen oder in der Trenntechnik, zum Beispiel als selektiv-permeable Membranen in der Wasserentsalzung, Abwasserreinigung, Dialyse oder lonenextraktion bzw. -retention, eingesetzt werden.

Ein weiterer Gegenstand der vorliegenden Anmeldung sind daher Membranen, Filme, Composit- und Verbundmaterialien enthaltend mindestens eine polymere aromatische Phosphonsäure gemäß der vorliegenden Erfindung. Bevorzugt ist eine polymere aromatische Phosphonsäure, die Einheiten der Formel V enthält.

Die erfindungsgemäßen aromatischen Phosphonsäuren sowie die erfindungsgemäßen aromatischen Phosphonate können auch gemeinsam mit weiteren Verbindungen, zum Beispiel in Form von Polymermischungen eingesetzt werden. Diese Polymermischungen eignen sich ebenfalls zur Herstellung von Membranen, Filmen, Composit- oder Verbundmaterialien, wie vorstehend aufgeführt.

Geeignete Partner für Polymermischungen sind nicht-funktionalisierte Polymere. Unter dem Begriff "nicht-funktionalisiertes Polymer" werden im Rahmen der vorliegenden Erfindung solche Polymere verstanden, die weder perfluorierte und sulfonierte oder carboxylierte (ionomere) Polymere wie beispielsweise Nafion^{®} oder Flemion^{®} (carbonsaurer Polyelektrolyt) noch zum Erhalt einer ausreichenden Protonenleitfähigkeit mit geeigneten Gruppen wie beispielsweise -SO₃H-Gruppen oder -COOH-Gruppen funktionalisierte Polymere sind. Bezüglich dieser im Rahmen der vorliegenden Erfindung verwendbaren nicht-funktionalisierten Polymere exisitieren keinerlei besondere Beschränkungen, solange diese im Rahmen der Anwendungsbereiche, in denen die erfindungsgemäßen Polymersysteme eingesetzt werden, stabil sind. Werden gemäß einer bevorzugten Verwendung diese in Brennstoffzellen eingesetzt, so sind Polymere zu verwenden, die bis zu 100°C und bevorzugt bis zu 200°C oder höher thermisch stabil sind und eine möglichst hohe chemische Stabilität aufweisen. Vorzugsweise werden eingesetzt:
- Polymere mit aromatischem Backbone wie beispielsweise Polyimide, Polysulforie, Polyethersulfone wie beispielsweise Ultrason^{®}, Polyaryletherketone wie Polyetheretherketone (PEEK), Polyetherketone (PEK), Polyetherketonketone (PEKK), Polyetheretherketonketone (PEEKK), Polybenzothiazole, Polybenzimidazole, Polyamide, Polyphenylenoxide, z. B. Poly-2,6-dimethyl-1,4-phenylenoxide, Polyphenylensulfide, Polyphenylene,
- Polymere mit fluoriertem Backbone wie beispielsweise Teflon^{®} oder PVDF,
- Thermoplastische Polymere oder Copolymere wie beispielsweise Polycarbonate, wie beispielsweise Polyethylencarbonat, Polypropylencarbonat, Polybutadiencarbonat oder Polyvinylidencarbonat oder Polyurethane, wie sie unter anderem in der WO 98/44576 beschrieben sind,
- Vernetzte Polyvinylalkohole,
- Vinylpolymere wie
   - Polymere und Copolymere des Styrols oder Methylstyrols, Vinylchlorids, Acrylnitrils, Methacrylnitrils, N-Methylpyrrolidons, N-Vinylimidazols, Vinylacetats, Vinylidenfluorids,
   - Copolymere aus Venylchlorid und Vinylidenchlorid, Vinylchlorid und Acrylnitril, Vinylidenfluorid und Hexafluorpropylen,
   - Terpolymere aus Vinylidenfluorid und Hexafluorpropylen sowie einer Verbindung aus der Gruppe bestehend aus Vinylfluorid, Tetrafluorethylen und Trifluorethylen. Derartige Polymere sind beispielsweise in der US 5,540,741 offenbart, deren diesbezüglicher Offenbarungsgehalt vollumfänglich in den Kontext der vorliegenden Anmeldung einbezogen wird;
- Phenol-Formaldehydharze, Polytrifluorstyrol, Poly-2,6-diphenyl-1,4-phenylenoxid, Polyarylethersulfone, Polyarylenethersulfone, phosphoniertes Poly-2,6-dimethyl-1,4-phenylenoxid.
- Homo-, Block- und Copolymere, hergestellt aus:
   - olefinischen Kohlenwasserstoffen wie beispielsweise Ethylen, Propylen, Butylen, Isobuten, Propen, Hexen oder höheren Homologen, Butadien, Cyclopenten, Cyclohexen, Norbornen, Vinylcyclohexan,
   - Acrylsäure oder Methacrylsäureestern wie beispielsweise Methyl-, Ethyl-, Propyl-, Isopropyl-, Butyl-, Isobutyl-, Hexyl-, Octyl-, Decyl-, Dodecyl-, 2-Ethylhexyl-, Cyclohexyl-, Benzyl-, Trifluoromethyl-, oder Hexafluoropropylester oder Tetrafluoropropylacrylat oder Tetrafluoropropylmethacrylat,
   - Vinylethern wie beispielsweise Methyl-, Ethyl,- Propyl-, Isopropyl-, Butyl-, Isobutyl-, Hexyl-, Octyl-, Decyl-, Dodecyl-, 2-Ethylhexyl-, Cyclohexyl-, Benzyl-, Trifluoromethyl-oder Hexafluoropropyl- oder Tetrafluoropropyl-Vinylether.
- basische, stickstoffhaltige Polymere wie Poly(p-Phenylquinoxalin), Poly(benzimidazole).

Sämtliche dieser nicht-funktionalisierten Polymere können prinzipiell in vernetzter oder unvernetzter Form eingesetzt werden. Es können auch Mischungen der genannten Polymere eingesetzt werden.

Besonders bevorzugte als Blendpartner geeignete nicht-funktionalisierte Polymere sind Polymere mit aromatischem Backbone wie beispielsweise Polyimide, Polysulfone, Polyethersulfone wie beispielsweise Ultrason^{®}, Polyaryletherketone wie Polyetheretherketone (PEEK), Polyetherketone (PEK), Polyetherketonketone (PEKK), Polyetheretherketonketone (PEEKK), Polybenzothiazole, Polybenzimidazole, Polyamide, Polyphenylenoxide, z. B. Poly-2,6-dimethyl-1,4-phenylenoxide, Polyphenylensulfide, Polyphenylene. Ganz besonders bevorzugt sind Polysulfone und Polyethersulfone.

Die erfindungsgemäße polymere aromatische Phosphonsäure und/oder das erfindungsgemäße polymere aromatische Phosphonat können des Weiteren gemeinsam mit einem oder mehreren weiteren funtionalisierten Polmeren eingesetzt werden. Dabei sind unter funktionalisierten Polymeren solche Polymere zu verstehen, die ionenleitend, insbesondere protonenleitend sind. Dabei kann es sich entweder um basische oder saure Polymere handeln. Bevorzugte protonenleitende Polymere mit sauren Gruppen sind Sulfonsäuregruppen, Phosphonsäuregruppen und/oder Carbonsäuregruppen enthaltende Polymere. Unter Sulfonsäure-, Carbonsäure- und/oder Phosphonsäuregruppen sind Gruppen der Formeln -SO₃X, -COOX und -PO₃X₂ zu verstehen, wobei X H, NH₄⁺, NH₃R⁺, NH₂R₃⁺, NHR₃⁺ oder NR₄⁺ bedeutet, wobei R ein beliebiger Rest, bevorzugt ein Alkylrest, ist, der gegebenenfalls einen oder mehrere weitere Reste aufweist, die unter für Brennstoffzellen üblicherweise vorliegenden Bedingungen Protonen abgeben können. Diese Polymere sind dem Fachmann bekannt und kommerziell erhältlich, bzw. können nach dem Fachmann bekannten Verfahren hergestellt werden. Geeignete funktionalisierte Polymere sind zum Beispiel in WO 2004/076530, EP-A 0 574 791, EP-A 0 008 895, EP-A 0 575 807, WO 02/077068, WO 03/054991, JP 2000294033 A2, JP 2001233974 A2 und JP 2002025580 offenbart. Bevorzugte basische Polymere sind Poly(benzimidazol), Poly(p-Phenylquinoxalin) oder Mischungen davon. Diese Polymere sind dem Fachmann bekannt und kommerziell erhältlich, bzw. können nach dem Fachmann bekannten Verfahren hergestellt werden.

Bevorzugte funktionalisierte Polymere sind zum Beispiel Sulfonsäuregruppen enthaltende Polymere ausgewählt aus der Gruppe bestehend aus perfluorierten sulfonierten Kohlenwasserstoffen wie Nafion® von E. I. Dupont, sulfonierten aromatischen Polymeren wie sulfonierten Poly-aryletherketonen wie Polyetheretherketonen (sPEEK), sulfonierten Polyetherketonen (sPEK), sulfonierten Polyetherketonketonen (sPEKK), sulfonierten Polyetheretherketonketonen (sPEEKK), sulfonierten Polyarylenethersulfonen, sulfonierten Polybenzobisbenzazolen, sulfonierten Polybenzothiazolen, sulfonierten Polybenzimidazolen, sulfonierten Polyamiden, sulfonierten. Polyetherimiden, sulfonierten Polyphenylenoxiden, z. B. Poly-2,6-dimethyl-1,4-phenylenoxide, sulfonierten Polyphenylensulfiden, sulfonierten Phenol-Formaldehydharzen (linear oder verzweigt), sulfonierten Polystyrolen (linear oder verzweigt), sulfonierten Polyphenylenen und weiteren sulfonierten aromatischen Polymeren.

Die sulfonierten aromatischen Polymere können teilweise oder vollständig fluoriert sein. Weitere sulfonierte Polymere umfassen Polyvinylsulfonsäuren, Copolymere aufgebaut aus Acrylnitril und 2-Acrylamido-2-methyl-1-propansulfonsäuren, Acrylnitril und Vinylsulfonsäuren, Acrylnitril und Styrolsulfonsäuren, Acrylnitril und Methacryloxyethylenoxypropansulfonsäuren, Acrylnitril und Methacryloxyethylenoxytetrafluoroethylensulfonsäuren usw.. Die Polymere können wiederum teilweise oder vollständig fluoriert sein. Weitere Gruppen geeigneter sulfonierter Polymere umfassen sulfonierte Polyphosphazene wie Poly(sulfophenoxy)phosphazene oder Poly(sulfoethoxy)phos-phazene. Die Polyphosphazen-Polymere können teilweise oder vollständig fluoriert sein. Sulfonierte Polyphenylsiloxane und Copolymere davon, Poly(sulfoalkoxy)phosphazene, Poly(sulfotetrafluoroethoxypropoxy)siloxane sind ebenfalls geeignet.

Beispiele für geeignete Carbonsäuregruppen enthaltende Polymere umfassen Polyacrylsäure, Polymethacrylsäure und beliebige Copolymere davon. Geeignete Polymere sind zum Beispiel Copolymere mit Vinylimidazol oder Acrylnitril. Die Polymere können wiederum teilweise oder vollständig fluoriert sein.

Geeignete Polymere zusätzliche, d.h. neben den erfindungsgemäßen Polymeren einsetzbare Phosphonsäuregruppen enthaltende Polymere, sind z. B. Polyvinylphosphonsäure, Polybenzimidazolphosphonsäure, phosphonierte Polyphenylenoxide, zum Beispiel Poly-2,6-dimethyl-phenylenoxide usw.. Die Polymere können teilweise oder vollständig fluoriert sein.

Des Weiteren können die erfindungsgemäße polymere aromatische Phosphonsäure oder das erfindungsgemäße polymere aromatische Phosphonat gemeinsam mit Säure-Base-Blends, wie sie zum Beispiel in WO 99/54389 und WO 00/09588 offenbart sind, eingesetzt werden. Dabei handelt es sich im Allgemeinen um Polymermischungen umfassend ein Sulfonsäuregruppen enthaltendes Polymer und ein Polymer, das primäre, sekundäre oder tertiäre Aminogruppen aufweist, wie sie in WO 99/54389 offenbart sind oder Polymermischungen, die durch Mischen von Polymeren, die basische Gruppen in der Seitenkette enthalten, mit Sulfonat-, Phosphonat- oder Carboxylatgruppen (Säure- oder Salzform) enthaltenden Polymeren erhalten werden. Geeignete Sulfonat-, Phosphonat- oder Carboxylatgruppen enthaltende Polymere sind vorstehend genannt (siehe Sulfonsäure, Carbonsäure- oder Phosphonsäuregruppen enthaltende Polymere). Polymere, die basische Gruppen in der Seitenkette enthalten, sind solche Polymere, die durch Seitenkettenmodifikation von mit metallorganischen Verbindungen deprotonierbaren Engineering-Arylhauptketten-Polymeren mit arylenhaltigen N-basischen Gruppen erhalten werden, wobei tertiäre basische N-Gruppen (wie zum Beispiel tertiäres Amin oder basischen N enthaltende heterocyclische aromatische Verbindungen wie Pyridin, Pyrimidin, Triazin, Imidazol, Pyrazol, Triazol, Thiazol, Oxazol usw.) enthaltende aromatische Ketone und Aldehyde an das metallierte Polymer gebunden werden. Dabei kann das als Zwischenverbindung entstehende Metall-Alkoholat in einem weiteren Schritt entweder mit Wasser protoniert werden oder mit Halogenalkanen verethert werden (W00/09588).

Es ist ebenfalls möglich, dass die erfindungsgemäßen polymeren aromatischen Phosphonsäuren und/oder polymeren aromatischen Phosphonate gemeinsam mit mehreren der vorstehend genannten fuktionalisierten Polymeren eingesetzt werden. Daneben können die Mischungen zusätzlich ein oder mehrere nicht-funktionalisierte Polymere enthalten. Geeignete nicht-funktionalisierte Polymere sind ebenfalls vorstehend genannt.

Besonders bevorzugte als Blendpartner eingesetzte funktionalisierte Polymere sind Sulfonsäuregruppen.enthaltende Polymere, wobei geeigneter Sulfonsäuregruppen enthaltende Polymere vorstehend genannt sind. Ganz besonders bevorzugt sind Blends enthaltend mindestens eine erfindungsgemäße polymere aromatische Phosphonsäure und/oder mindestens ein erfindungsgemäßes polymeres aromatisches Phosphonat und mindestens ein funktionalisiertes, bevorzugt sulfoniertes Polymer. Ganz besonders bevorzugt eingesetzte sulfonierte Polymere sind ausgewählt aus der Gruppe bestehend aus sulfoniertem Poly(etheretherketon), Poly(phenylsulfon), Poly(sulfon) und Poly(ethersulfon). Weitere bevorzugt als Blendpartner eingesetzte funktionalisierte Polymere sind die basischen Polymere Poly(benzimidazol), Poly(p-Phenylquinoxalin) oder Mischungen davon sowie Derivate davon. Diese können mit den erfindungsgemäßen polymeren aromatischen Phosphonaten oder Phosphonsäuren Säure-Base-Blends bilden.

In den Polymerblends liegen im Allgemeinen 0,1 bis 95 Gew.-%, bevorzugt 1 bis 25 Gew.-% der erfindungsgemäßen polymeren aromatischen Phosphonsäure oder des erfindungsgemäßen aromatischen Phosphonats und im Allgemeinen 99,9 bis 5 Gew.-%, bevorzugt 75 bis 99 Gew.-% wenigstens eines weiteren Polymers vor.

Ein weiterer Gegenstand der vorliegenden Anmeldung sind daher Mischungen enthaltend mindestens eine erfindungsgemäße polymere aromatische Phosphonsäure und/oder mindestens ein erfindungsgemäßes polymeres aromatisches Phosphonat sowie mindestens ein weiteres Polymer, bevorzugt mindestens ein weiteres funktionalisiertes Polymer.

Bevorzugte polymere aromatische Phosphonsäuren und Phosphonate und bevorzugte weitere Polymere sind vorstehend genannt.

Es wurde überraschenderweise gefunden, dass bei Einsatz von Mischungen von mindestens einer erfindungsgemäßen polymeren aromatischen Phosphonsäure und/oder mindestens einem erfindungsgemäßen polymeren aromatischen Phosphonat und mindestens einem weiteren funktionalisierten Polymer Membranen mit hervorragender lonenleitfähigkeit und Brennstoffzellen mit hervorragender Leistungsfähigkeit erhalten werden, die über die erwartete Summierung der Einzelleistungen der genannten funktionalisierten Polymere hinausgeht.

Membranen, enthaltend mindestens eine polymere aromatische Phosphonsäure und/oder mindestens ein polymeres aromatisches Phosphonat gemäß der vorliegenden Erfindung können gemäß dem Fachmann bekannten Verfahren hergestellt werden. Geeignete Verfahren sind beispielsweise in US 6,828,407 B2 genannt.

Im Folgenden ist ein bevorzugtes Verfahren zur Herstellung von Membranen enthaltend mindestens eine erfindungsgemäße polymere aromatische Phosphonsäure oder mindestens ein erfindungsgemäßes aromatisches Phosphonat (im Folgenden phosphonsaure aromatische Polymere genannt) beschrieben.

Phosphonsaure Polyelektrolytmembranen aus den erfindungsgemäßen phosphonsauren aromatischen Polymeren werden im Allgemeinen durch Auflösen des phosphonsauren Polyelektrolyts in einem organischen Lösungsmittel, Aufziehen der bevorzugt gefilterten Lösung oder Mischung auf eine geeignete Oberfläche oder Imprägnierung eines Trägermaterials mit derselben und anschließende teilweise bis vollständige Verdampfung des Lösungsmittels hergestellt. Möglich ist auch die Zugabe von löslichen oder homogen dispergierbaren Additiven wie weiteren Polyelektrolyten, Stabilisatoren, Füllstoffen und Perogenen wie Poly(ethylenoxid), Poly(propylenoxid), Poly(vinylalkohol) zur bevorzugt gefilterten Polymerlösung und deren anschließende Verarbeitung zu einer Membran. Die Lösungsmittelwahl ist nur durch geeignete Lösekraft und Inertheit bezüglich des phosphorisauren aromatischen Polymers beschränkt und umfasst chlorierte Kohlenwasserstoffe wie Dichlormethan, Chloroform und Tertrachlorkohlenstoff, 1,2-Dichlorethan, Chlorbenzol und Dichlorbenzol, Ether wie Diethylether, Tetrahydrofuran, und Dioxan, die Alkylenglykolalkylether wie Ethylenglykolmethylether, Ethylenglykolethylether und Propylenglykolmethylether, Alkohole wie Methanol, Ethanol und Propanol, sowie die bevorzugt eingesetzten, aprotischen, polaren Flüssigkeiten vom Amid-Typ wie N,N-Dimethylformamid, N,N-Dimethylacetamid und N-Methylpyrrolidon, mit besonderer Präferenz von N-Methylpyrrolidon, sowie Mischungen dieser Lösungsmittel.

Eine Verbesserung der Löslichkeit besonders von hochfunktionalisierten phosphonsauren aromatischen Polymeren in organischen Lösungsmitteln kann zum Beispiel durch Zugabe von 0,05 - 2 Vol.% einer starken Säure zum Lösungsmittel erzielt werden, so lange dies die Bildung einer homogenen Lösung nicht behindert. Eingesetzte Säuren sind konzentrierte wässrige Halogenwasserstoff Lösungen wie HCl oder HBr, oder konzentrierte Schwefel-, oder Salpetersäure oder starke organische Säuren wie Alkylsulfonsäuren und Trifluoressigsäure.

Zum Aufziehen der Polymerlösungen kommen als Oberflächen zum Beispiel Glas, durch Silanisierung hydrophobisierte Gläser und Kunststofffolien, als Trägermaterialien Kunstoffnetze, poröse Kunststoffmembranen und andere zur Verstärkung, Flexibilisierung und Erhöhung der Zähigkeit geeignete Substrate in Frage.

Nach Applikation der Polymerlösung auf die wie oben beschriebene Oberfläche, bzw. Imprägnierung des wie oben beschriebenen Substrates wird das Lösungsmittel durch Verdampfen bei Temperaturen von im Allgemeinen 0 - 150°C vollständig oder teilweise entfernt. Wird durch ausreichende Trockentemperatur und -dauer das Lösungsmittel weitestgehend entfernt, so wird im Allgemeinen eine homogene Membran ohne morphologische Strukturierung erhalten.

Die Restmenge des Lösungsmittels im Film kann durch die Wahl von Trockentemperatur und -zeit beeinflusst werden. Durch Eintauchen eines Restlösungsmittel-haltigen Filmes, bzw. Komposits in ein mit dem Polyelektrolyten unverträglichen, mit dem Lösungsmittel mischbaren Fällungsbad können oberflächenporöse, asymmetrische Membranmorphologien erzeugt werden. Die Ausprägung und Morphologie der dadurch erzeugten porösen Strukturierung kann durch den Restlösungsmittelgehalt, Wahl des Fällungsbades und dessen Temperatur beeinflusst werden.

Die erzeugten Membranstrukturen können zur Erhöhung der zur Ionenaufnahme oder der Kontaktierung der Membran mit einer Elektrodenschicht nötigen Oberfläche, sowie als Mikrohohlräume zur Abscheidung von die Protonenleitung positiv beeinflussenden polymeren oder niedermolekularen Substanzen, wie sauren Polyelektrolyten oder Zirkon(IV)phosphaten, - phosphonaten und Zirkon(IV)sulfonphosphonaten, die Wasserretention bei erhöhter Temperatur fördernden Silikaten oder sauren funktionalisierten Silikaten, eingesetzt werden, solange die chemische und mechanische Beständigkeit, Flexibiliät und Trennleistung der Membran nicht negativ beeinflusst werden.

Die Dicke der erzeugten Membran lässt sich durch die Konzentration der eingesetzten Polymerelektrolyt-Lösung, Schichtdicke der aufgetragenen Polymerlösung, sowie Dicke des eingesetzten Trägermaterials beeinflussen, wobei eine möglichst dünne Membran zur Erhöhung der Protonenleitfähigkeit bevorzugt wird. Eine bevorzugte Membrandicke für die Anwendung als Brennstoffzellmembran ist 1 - 200 µm und wird so gewählt, dass eine möglichst hohe Protonenleitfähigkeit bei angemessener mechanischen. Belastbarkeit und Diffusionsbarrierewirkung resultiert.

Ein weiterer Gegenstand der vorliegenden Anmeldung sind daher Membranen, Filme, Composit- oder Verbundmaterialien enthaltend mindestens eine polymere aromatische Phosphonsäure bzw. mindestens ein polymeres aromatisches Phosphonat gemäß der vorliegenden Erfindung oder eine erfindungsgemäße Mischung enthaltend mindestens eine erfindungsgemäße aromatische Phosphonsäure oder mindestens ein erfindungsgemäßes aromatisches Phosphonat und mindestens ein weiteres Polymer.

Bevorzugte polymere aromatische Phosphonsäuren, bevorzugte polymere aromatische Phosphonate und bevorzugte weitere Polymere sind vorstehend genannt.

Diese Membranen können in Brennstoffzellen sowie als Membranen in der Trenntechnik, bevorzugt als selektiv permeable Membranen in der Wasserentsalzung, Abwasserreinigung, Dialyse sowie in der lonenaxtraktion und -retention eingesetzt werden.

Ein weiterer Gegenstand der vorliegenden Erfindung ist eine Brennstoffzelle, enthaltend mindestens eine erfindungsgemäße Membran oder mindestens eine polymere aromatische Phosphonsäure oder mindestens ein polymeres aromatisches Phosphonat oder Mischungen gemäß der vorliegenden Erfindung.

Weiterhin betrifft die vorliegende Erfindung die Verwendung der erfindungsgemäßen Membranen in Brennstoffzellen.

Ein weiterer Anwendungszweck der erfindungsgemäßen phosphonsauren Polyelektrolyte (d. h. die erfindungsgemäßen polymeren aromatischen Phosphonsäuren oder Phosphonate oder Mischungen mit weiteren Polymeren) ist die Quellungsminderung aromatischer Polyphosphonsäure- und Polyelektrolyt-Polyphosphonsäure-Blend-Membranen via ionisch vernetzender in-situ Bildung von Zirkon(IV)-Polyphosphonaten durch Einwirken von Zr(IV)-Salz-Lösungen, insbesondere wässrigem Zirkonylchlorid auf solche Membranen.

Überraschenderweise wurde gefunden, dass die Behandlung von Membranen der erfindungsgemäßen phosphonsauren Polyelektrolyte (d. h. die erfindungsgemäßen polymeren aromatischen Phosphonsäuren oder Phosphonate oder Mischungen mit weiteren Polymeren), insbesondere von Blendmembranen (aus den vorstehend genannten Mischungen) mit wässrigen Zr(IV)-Salz-Lösungen, insbesondere ZrOCl₂₋Lösungen, eine starke Quellungsminderung bei gleichzeitigem Erhalt der Leitfähigkeit bewirkt.

Ein weiterer Gegenstand der vorliegenden Erfindung ist daher die Verwendung der erfindungsgemäßen polymeren aromatischen Phosphonsäuren oder Phosphonate zur Quellungsminderung von aromatischen Polyphosphonsäure- und Polyelektrolyt-Polyphosphonsäure-Blend-Membranen via ionisch vernetzender in-situ Bildung von Zirkon(IV)-Polyphosphonaten, sowie aromatische Polyphosphonsäure- und Polyelektrolyt-Polyphosphonsäure-Blend-Membranen, die Zirkon(IV)-Polyphosphonate enthalten.

Die erfindungsgemäßen Polyelektrolyte können ebenfalls als nicht migrationsfähige, polyphosphonsaure Komponente in Blendmembranen mit basischen stickstoffhaltigen aromatischen Polymeren wie Poly(benzimidazol) oder Poly(p-Phenylquinoxalin) dienen.

Weitere Anwendungen der erfindungsgemäßen phosphonsauren Polyelektrolyte sind eine Kontaktvermittelung, oder -verbesserung zwischen Apatitoberflächen von Zähnen bzw. Knochen und Kunststoff- oder Metallimplantaten. Hierbei kann das polyphosphonsaure Material in Reinform, als Mischung mit verschiedenen Additiven und als eigenschaftsverbessernder Blendbestandteil zur Anwendung kommen.

Die erfindungsgemäßen Polyphosphonsäuren oder Phosphonate können des Weiteren als korrosionhemmende Metallbeschichtungen, oder als haftvermittelnde Schicht zwischen Metalloberfläche und weiteren Materialien dienen.

Die nachfolgenden Beispiele erläutern die Erfindung zusätzlich:

### Beispiele:

### Beispiel 1: Herstellung eines phosphonsauren Poyielektrolyts auf Basis des Poly(sulfons) ULTRASON^{®} S (Substanz P1)

### Herstellung der bromierten Vorstufe br-P1

100 g (225,97 mmol Bisphenol-A-Einheiten) des Poly(sulfons) ULTRASON^{®} S, fortan als P1 bezeichnet, werden in einem 1000 ml Dreihalskolben mit Rückflußkühlung, Tropftrichter und Rührwerk in einem auf 70°C temperierten Ölbad in 20 Minuten durch Rühren in 400 ml Chloroform aufgelöst. Zur erhaltenen schwach-beigen und leicht opaquen Lösung wird eine Lösung von 58 g (362,7 mmol) Brom in 100 mol Chloroform unter schnellem Rühren zulaufen gelassen. Der intensiv rot-braune, homogene Ansatz wird bei 70°C weitergerührt und die entwickelte HBr durch Einleiten in wässriges Alkali abgefangen.

Nach 3 h wird der deutlich entfärbte Ansatz durch rasches Eingießen in stark gerührte 2,5 I einer 4:1 (v/v) Mischung Methanol/Aceton bei 20°C gefällt. Nach 5 Minuten Rühren wird das Fällungsmittel dekantiert, durch 1,5 I einer gleichen Mischung ersetzt und darin das Polymer mechanisch zerkleinert.

Die erhaltenen weißen Flocken werden durch 24-stündige Soxhlet-Extraktion mit reinem Methanol über KOH gereinigt und anschließend für 24 h im Vakuum bei 100°C getrocknet.

Das erhaltene Produkt wird fortan als br-P1 bezeichnet.

| | |
|---|---|
| Auswaage | 118,32 g |

Elementaranalyse:

| | | |
|---|---|---|
| C: | 61,85% (ber.) | 61,13 % (gef.) |
| H: | 4,00 % (ber.) | 3,98 % (gef.) |
| S: | 6,12 % (ber.) | 6,34 % (gef.) |

Mit dS_{Br} = 410,5943 / w(C) - 5,6082 folgt ds_{Br} = 110,9 mol-%, entsprechend 1,11 Bromatome je Bisphenol-A-Einheit, d.h. je Wiederholungseinheit.

¹H-NMR-Spektrum(300 MHz, CDCml₃):
1,69 ppm, Integralwert = 1 (i-Propyliden Hₐₗₖ)
6,94 - 7,87 ppm, Integralwert = 2,83 (Ar-H)

### Herstellung des phosphonsauren Polymers pho-P1

10 g br-P1 (20,94 mmol Brom) werden mit 270 mg (2;09 mmol, entsprechend 0,1 mol-Äquivalenten bezüglich Bromgehalt) wasserfreiem Ni(II)chlorid in einen 250 ml Dreihalskolben mit Rührwerk, Luftkühler mit angeschlossener Kühlfalle und septumverschlossenen Tropftrichter mit Stickstoffeinleitung gegeben. In einem auf 190°C temperierten Ölbad wird der Ansatz durch Einleitung eines schwachen Stickstoffstromes von Restfeuchte befreit. Zum trockenen Ansatz werden unter N₂-Gegenstrom 3 g Diphenylether zugegeben und das Polymer unter Rühren über 1 h zu einer homogen, viskosen, hell-beigen Lösung verarbeitet. Nachdem die Ölbadtemperatur auf 200°C erhöht worden ist, wird über das Septum 6,55 g (26,2 mmol) Tributylphosphit in den Tropftrichter gegeben und dieses unter Rühren über 30 Minuten dem Ansatz zugefügt. Ungefähr 3 Minuten nach Start der Zugabe wird eine Farbänderung über Dunkelrot nach Purpur beobachtet. Nach ca. 5 Minuten wird bei plötzlichem starkem Aufblähen und kurzzeitiger Dunkelblau-Färbung durch den N₂-Strom eine farblose Flüssigkeit (NMR-spektroskopisch als Brombutan identifiziert) abgetrieben. Im Verlauf der nächsten 1/2 h werden ca. 5 ml dieser Flüssigkeit in der Kühlfalle kondensiert, während der Reaktionsansatz unter Schwarzfärbung geliert. Das Rührwerk wird abgeschaltet und der Ansatz für 8 h auf 180°C temperiert.

Nach Abkühlen auf Raumtemperatur wird der Ansatz durch Ultraschallbehandlung mit 250 ml einer 100:50:2 (v/v/v) Mischung Methanol / Aceton / Salzsäure-Mischung von Diphenylether und Nickel befreit. Das erhaltene zäh-pastöse Produkt wird mechanisch zerkleinert und 12 h mit Methanol über KOH soxlethiert.

Nach Trocknen im Vakuum bei 75°C wird ein kompaktes, hellbeiges Material erhalten. Dieses erweist sich als leicht-löslich in warmem N-Methyl-Pyrrolidon, wobei eine hell-beige, auffallend viskose Lösung gebildet wird. Bei Zugabe einiger Tropfen einer 1-%igen (m/m) Zirkon(IV)acetylacetonat-N-Methyl-Pyrrolidon-Lösung kann ein in Dimethylsulfoxid, N,N-Dimethylformamid, N,N-Dimethylacetamid, und Trifluoressigsäure unlöslicher weißlicher Niederschlag von Zirkon(IV)-Polyphopshonsäure gefällt werden. Eine entsprechende Fällung kann an N-Methyl-Pyrrolidon-Lösungen von P1 und br-P1 nicht festgestellt werden.

Vom erhaltenen Produkt, welches folgend als pho-P1 bezeichnet wird, wird ein ¹H- und ³¹P-NMR-Spektrum aufgenommmen.

Auswaage : 9,30 g

Bromgehaltbestimmung: Oxidativer Aufschluss pho-P1 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%.

¹H-NMR-Spektrum pho-P1 (300 MHz, d₆-Dimethylsulfoxid):
0,65 - 0,70 ppm, Integralwert 1,48 (Ester-CH₃)
1,05 - 1,08 ppm, Integralwert 0,92 (Ester-CH₂)
1,26 - 1,28 ppm) Integralwert 1,05 (Ester-CH₂)
1,62 - 1,64 ppm, Integralwert 1,58 (i-Propyliden-CH₃)
3,67 - 3,82 ppm, Integralwert 1,00 (Ester-CH₂)
6,97 - 7,87 ppm, Integralwert 4,26 (Ar-H)

Das Verhältnis der normierten Integrale von Butyl-CH₃ zu i-Propyliden-CH₃ ergibt einen Phosphonylierungsgrad von 93,7 mol%, enstprechend 0,9 Phosphondibutylester je Bisphenol-A-Einheit, d.h. je Wiederholungseinheit.

³¹P-NMR-Spektrum pho-P1 (121,5 MHz, 300 MHz H-Entkopplung, d₆-Dimethylsuffoxid): 16,8 ppm (aromatischer Phosphonsäuredibutylester)

### Herstellung des phosphonsauren Polymers pho-P1.1

Nach der unter phoP1 beschriebenen Prozedur werden 10 g br-P1 (20,94 mmol Brom) mit 125 mg (1,05 mmol, entsprechend 0,05 mol-Äquiv. bezüglich Bromgehalt) wasserfreiem Ni(II)chlorid und 6,55 g (26,2 mmol) Tributylphosphit umgesetzt.

Nach Aufarbeitung wird ein kompaktes, hellbeiges Material erhalten, welches sich als leicht-löslich in warmen N-Methyl-Pyrrolidon erweist, und bei Zugabe einiger Tropfen 1-%iger (m/m) Zirkon(IV)acetylacetonat-N-Methyl-Pyrrolidon-Lösung einen unlöslichen Niederschlag von Zirkon(IV)-Polyphopshonsäure bildet.

Vom erhaltenen Produkt, welches nachfolgend als pho-P1.1 bezeichnet wird, wird ein ¹H-und ³¹P-NMR-Spektrum aufgenommen.

| | |
|---|---|
| Auswaage : | 9,30 g |

Bromgehaltbestimmung: Oxidativer Aufschluß pho-P1.1 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%.

¹H-NMR-Spektrum pho-P1.1 (300 MHz, d₆-Dimethylsulfoxid):
0,65 - 0,70 ppm, Integralwert 1,48 (Ester-CH₃)
1,05 - 1,08 ppm, Integralwert 0,92 (Ester-CH₂)
1,26 - 1,28 ppm, Integralwert 1,05 (Ester-CH₂)
1,62 - 1,64 ppm, Integralwert 1,58 (i-Propyliden-CH₃)
3,67 - 3,82 ppm, Integralwert 1,00 (Ester-CH₂)
6,97 - 7,87 ppm, Integralwert 4,26 (Ar-H)

Das Verhältnis der normierten Integrale von Butyl-CH₃ zu i-Propyliden-CH₃ ergibt einen Phosphonylierungsgrad von 97,3 mol-%, enstprechend 0,98 Phosphondibutylester je Bisphenol-A-Einheit, d.h. je Wiederholungseinheit.

³¹P-NMR-Spektrum pho-P1.1 (121,5 MHz, 300 MHz H-Entkopplung, d₆-Dimethylsulfoxid): 16,8 ppm, (aromatischer Phosphonsäuredibutylester)

### Beispiel 1.1: Herstellung eines phosphonsauren Poylefektrolyts auf Basis des Poly(sulfons) ULTRASON^{®} S (Substanz P1.2)

### Herstellung der bromierten Vorstufe br-P1.2

100 g (225,97 mmol Bisphenot-A-Einheiten) P1 werden mit 75 g (469,04 mmol) Brom in
100 mol Chloroform, wie für br-P1 beschrieben umgesetzt und aufgearbeitet.

Das erhaltene kompakte, reinweiße Produkt wird fortan als br-P1.2 bezeichnet.

Auswaage br-P1.2: 123,7 g

Elementaranalyse br-P1.2:

| | | |
|---|---|---|
| C: | 59,17 % (ber.) | 58,70 % (gef.) |
| H: | 3,78 % (ber.) | 3,75 % (gef.) |
| S: | 5,86 % (ber.) | 5,97 % (gef.) |

Mit ds_{Br} = 410,5943/w(C)-5,6082 folgt ds_{Br} = 138,7 mol%, entsprechend 1,39 Bromatome je Bisphenol-A-Einheit.

¹H-NMR-Spektrum brP1.2 (300 MHz, CDCl₃):
1,59 ppm, Integralwert = 1 (i-Propyliden Hₐₗₖ)
6,87 - 7,76 ppm, Integralwert = 2,46 (Ar-H)

### Herstellung des phosphonsauren Polymers pho-P1.2

10 g br-P1.2 (25,13 mmol Brom) werden mit 325 mg (2,513 mmol, entsprechend 0,1 mol-Äquivalenten bezüglich Bromgehalt) wasserfreiem Ni(II)chlorid in einen 250 ml Dreihalskolben mit Rührwerk, Luftkühler mit angeschlossener Kühlfalle und septumverschlossenen Tropftrichter mit Stickstoffeinleitung gegeben. Umsetzung mit 5,22 g (31,41 mmol) Triethylphosphit und Aufarbeitung erfolgen wie für pho-P1 beschrieben.

Es wird ein kompaktes, hellbeiges Material erhalten. Dieses erweist sich als stark quellbar, jedoch nicht homogen löslich in warmem N-Methyl-Pyrrolidon. Durch Zugabe von ca. 2 Vol-% konz. HBr kann eine deutlich stärkere Quellung, aber keine Lösungsbildung erzielt werden.

Vom erhaltenen Produkt, welches folgend als pho-P1.2 bezeichnet wird, wird an einer gequollenen Probe ein ¹H- und ³¹P-NMR-Spektrum in d₆-DMSO aufgenommen.

Auswaage phoP1.2: 9,15 g

Bromgehaltbestimmung: Oxidativer Aufschluß pho-P1.2 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%.

¹H-NMR-Spektrum pho-P1.2 (300 MHz, d₆-Dimethylsulfoxid):
0,90 - 1,00 ppm, Integralwert 1,00 (Ester-CH₃)
1,63 - 1,66 ppm, Integralwert 0,75 (i-Propyliden-CH₃)
3,78 - 3,88 ppm, Integralwert 0,68 (Ester-CH₂)
6,97 - 7,90 ppm, Integralwert 2,11 (Ar-H)

Das Verhältnis der normierten Integrale von Ethyl-CH₃ zu i-Propyliden-CH₃ ergibt einen Phosphonylierungsgrad von 132,6 mol-%, enstprechend 1,33 Phosphondiethylester je Bisphenol-A-Einheit, d.h. je Wiederholungseinheit.

³¹P-NMR-Spektrum pho-P1.2 (121,5 MHz, 300 MHz H-Entkopplung, d₆-Dimethylsulfoxid): 16,8 ppm (aromatischer Phosphonsäuredibutylester)

### Beispiel 2: Herstellung eines phosphonsauren Poyl(elektrolyts) auf Basis des Poly(ethersulfons) ULTRASON^{®} E (Substanz P2)

### Herstellung der bromierten Vorstufe br-P2

100 g (861,2 mmol Phenyl-Funktionalitäten) des Poly(ethersulfons) ULTRASON^{®} E der BASF AG, fortan als P2 bezeichnet, werden in einem 1000 ml Zweihalskolben mit Tropftrichter und Rührwerk bei Raumtemperatur für 4 h in 600 ml konzentrierter (95 - 98 %) Schwefelsäure aufgelöst. Zur erhaltenen schwach-beigen, transparenten Lösung wird eine Lösung von 30,9 g (215,43 mmol aktives Brom) Dibromoisocyanursäure in 300 ml konzentrierter (95 - 98 %) Schwefelsäure unter schnellem Rühren zugegeben. Hierbei fällt nach wenigen Minuten ein hellbeiger feiner Niederschlag aus. Nach 3h Rühren bei Raumtemperatur wird der Ansatz unter Rühren und Eiskühlung in 5000 ml destilliertem Wasser gefällt und durch mehrfaches Austausch des Fällungsmittel säurefrei gewaschen. Die erhaltenen weißen Polymerfäden werden mechanisch zerkleinert und 24 h mit Methanol über KOH soxlehtiert.

Nach Trocknung bei 100°C im Vakuum für 12 h werden kompakte weiße Flocken erhalten.

Auswaage: 115,8 g weiße Flocken und Stränge

Elementaranalyse:

| | | |
|---|---|---|
| C: | 53,00 % (ber.) | 52,95 % (gef.) |
| H: | 3,50 % (ber.) | 2,82 % (gef.) |
| S: | 12,20 % (ber.) | 11,88 % (gef.) |
| N: | 0,00 % (ber.) | 0,00 (gef.) |

Mit ds_{Br} = 182.4863 / w(C) - 2,9433 folgt ds_{Br} = 49,7 mol-%, entsprechend 0,5 Bromatome je Wiederhol-Einheit.

¹H-NMR-Spektrum br-P2 (300 MHz, d₆-Dimethylsulfoxid):
7,23 - 7,27 ppm, Integralwert 4,17 (Ar-H)
7,31 - 7,38 ppm, Integralwert 0,34 (Ar-H)
7,98 - 7,99 ppm, Integralwert 3,57 (Ar-H)
8,03 - 8,05 ppm, Integralwert 1,00 (Ar-H)
8,34 - 8,45 ppm, Integralwert 0,72 (Ar-H)

### Herstellung des phosphonsauren Polymers pho-P2

27,5 g der bromierten Vorstufe br-P2 (50,6 mmol Brom) und 1,31 g (10,1 mmol) wasserfreiem Ni(II)chlorid werden in einen 100 ml Dreihalskolben mit Rührwerk, offenem Luftkühler und septumverschlossenen Tropftrichter mit Stickstoffeinleitung gegeben. In einem auf 190°C temperierten Ölbad wird der Ansatz durch Einleitung eines schwachen Stickstoffstromes von Restfeuchte befreit. Zum trocknen Ansatz werden unter N₂-Gegenstrom 30 g Benzophenon zugegeben und das Polymer unter Rühren über 1 h zu einer hochviskosen, hell-braunen Lösung verarbeitet. Nachdem die Ölbadtemperatur auf 200°C erhöht worden ist, werden 16,8 g (101,2 mmol) Triethylphosphit über das Septum in den Tropftrichter gegeben und diese unter Rühren über 30 Minuten dem Ansatz zugefügt. Ungefähr 2 Minuten nach Start der Zugabe wird unter starkem Aufblähen des Ansatzes eine Farbänderung über Purpur nach Dunkelblau beobachtet und durch den N₂-Strom bei starkem Reflux eine farblose Flüssigkeit in eine Kühlfalle abgetrieben. Nach weiteren ca. 30 Sekunden geliert der Ansatz unter Shcwarzfärbung. Das Rührwerk wird abgeschaltet und der Ansatz für 8 h auf 170°C temperiert.

Nach Abkühlen auf Raumtemperatur wird eine Probe entnommen und diese durch Ultraschallbehandlung mit dreimal jeweils 10 ml iso-Hexan von Katalysatorrückständen, Benzophenon, Bromethan und Triethylphosphit-Resten befreit. Von der nach Entfernen des Extraktionsmittels durch Trocknen im Stickstoffstrom bei 100°C erhaltenen beigen Probe, im Folgenden als pho-P2 bezeichnet, wird ein ¹H-Spektrum in d₆-Dimethylsulfoxid aufgenommen. Der restliche Ansatz wird durch Ultraschallbehandlung mit 250 ml einer 100:2 (v/v) Mischung Methanol / Salzsäure-Mischung von Benzophenon befreit.

Nach Trocknen im Vakuum bei 75°C wird ein kompaktes, hellbeiges Material erhalten, Dieses erweist sich als löslich in warmen N-Methyl-Pyrrolidon, wobei eine hell-beige, auffallend viskose Lösung gebildet wird. Bei Zugabe einiger Tropfen einer 1-%igen (m/m) Zr(Acetylacetonat)₄-N-Methyl-Pyrrolidon-Lösung kann ein in Dimethylsulfoxid, N,N-Dimethylformamid, N,N-Dimethylacetamid, Trifluoressigsäure und Schwefelsäure unlöslicher weißlicher Niederschlag aus Zr(IV)-Polyphosphonat gefällt werden. Eine entsprechende Fällung kann an N-Methyl-Pyrrolidon-Lösungen von P2 und br-P2 nicht festgestellt werden.

Auswaage : 26,4 g hellbeigen kompakten Materials.

Bromgehaltbestimmung: Oxidativer Aufschluß pho-P2 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%.

¹H-NMR-Spektrum pho-P2 (300 MHz, d₆-Dimethylsulfoxid):
1,05 - 1,08 ppm, Integralwert 0,21 (Ester-CH₃)
4,00 - 4,03 ppm, Integralwert 0,15 (Ester-CH₂)
7,25 - 7,96 ppm, Integralwert 1,00 (Ar-H)

Das Verhältnis der Integrale x = Integral(Ethyl-CH₃) / Integral(Aryl-H) = 0,21 ergibt mit Phosphonylierungsgrad ds(P)=8x / (6+x) einen Phosphonylierungsgrad von 27,1 mol-%, enstprechend 0,27 Phosphondiethylestergruppen je wiederholende Monomereinheit.

³¹P-NMR-Spektrum pho-P2 (121,5 MHz, 300 MHz H-Entkopplung, d₆-Dimethylsulfoxid): 16,5 ppm (aromatischer Phosphonsäurediethylester)

### Beispiel 3: Herstellung eines phosphonsauren Poyl(elektrolyts) auf Basis des Po-ly(etheretherketons) VICTREX^{®} 450 P (Substanz P3)

### Herstellung der bromierten Vorstufe br-P3

25 g (86,71 mmol Wiederholungseinheiten) des Poly(etheretherketons) VICTREX^{®} 450 P, fortan als P3 bezeichnet, werden in einem 250 ml Zweihalskolben mit Tropftrichter und Rührwerk bei 50°C für 8 h in 200 ml reiner Methansulfonsäure aufgelöst. Zur erhaltenen dunkel-orangen, stark viskosen Lösung wird eine Lösung von 11,58 g (65,03 mmol aktives Brom) N-Bromsuccinimid in 25 ml reiner Methansulfonsäure unter schnellem Rühren über den Tropftrichter dem Ansatz zugegeben. Nach Rühren für 24 h bei 50°C wird der Ansatz unter Eiskühlung in 1000 ml destilliertem Wasser gefällt und durch mehrfachen Austausch des Fällungsmittels säurefrei gewaschen. Die erhaltenen hellgrauen Polymerfäden werden mechanisch zerkleinert und 24 h mit Methanol über KOH soxlehtiert.

Nach Trocknung bei 100°C im Vakuum für 12 h werden hellgraue Stränge erhalten.

Vom erhaltenen Produkt, fortan als br-P3 bezeichet, wird ein ¹H-NMR-Spektrum in Trifluormethansulfonsäure-Lösung mit externem d₆-Aceton-Lock aufgenommen.

Auswaage: 29,84 g

Elementaranalyse:

| | | |
|---|---|---|
| C: | 66,21 % (ber.) | 66,01 % (gef.) |
| H: | 3,28 % (ber.) | 3,22 % (gef.) |
| S: | 0,00 % (ber.) | 0,00 % (gef.) |
| N: | 0,00 % (ber.) | 0,00 % (gef.) |

Mit ds_{Br} = 288,937/w(C)-3,654 ergibt sich ein ds_{Br} = 72,5 mol-%, entsprechend 0,73 Bromatome je Wiederholungs-Einheit.

¹H-NMR-Spektrum von br-P3 mit externem d₆-DMSO-Lock (300 MHz, Trifluormethansulfonsäure):
6,70 ppm, Integralwert 0,37 (Ar-H)
6,90 ppm, Integralwert 22,08 (Ar-H)
7,17 ppm, Integralwert 0,86 (Ar-H)
7,54 ppm, Integralwert 0,66 (Ar-H)
7,71 ppm, Integralwert 10,55 (Ar-H)
7,97 ppm, Integralwert 1,00 (Ar-H)

Vergleich der Signallagen und Zahl der Signale in ¹H-NMR-Spektren von br-P3 und P3 zeigt Substitution sowohl der p-Oxy-Phenoxy- als auch der p-Oxy-Phenonyl-Ringe der Wiederholungseinheit.

### Herstellung des phosphonsauren Polymers pho-P3

10 g der bromierten Vorstufe br-P3 (20,96 mmol Brom) werden mit 272 mg (2,10 mmol, entsprechend 0,1 mol-Äquivalenten bezüglich Bromgehalt) wasserfreiem Ni(II)chlorid in einen 250 ml Dreihalskolben mit Rührwerk, offenem Luftkühler und septumverschlossenen Tropftrichter mit Stickstoffeinleitung gegeben. In einem auf 220°C temperierten Ölbad wird der Ansatz durch Einleitung eines schwachen Stickstoffstromes von Restfeuchte befreit. Zum trockenen Ansatz werden unter N₂-Gegenstrom 22 g Benzophenon zugegeben und das Polymer unter Rühren über 1 h zu einer homogenen hell-beigen Lösung verarbeitet. Nachdem die Ölbadtemperatur auf 200°C erhöht worden ist, wird über das Septum 21,2 g (128 mmol) Triethylphosphit in den Tropftrichter gegeben und dieses unter Rühren über 30 Minuten dem Ansatz zugefügt. Nach Zugabe von ungefähr 9,5 ml Phosphit wird unter starkem Aufblähen des Ansatzes eine Farbänderung über Purpur nach Dunkelblau beobachtet und durch den N₂-Strom bei starkem Reflux eine farblose Flüssigkeit in eine Kühlfalle abgetrieben. Nach ca. 30 Sekunden geliert der Ansatz unter Schwarzfärbung. Nach beendigter Phosphitzugabe wird der Rührer abgeschaltet und der Ansatz für 8 h auf 170°C temperiert.

Nach Abkühlen auf Raumtemperatur wird eine Probe durch Ultraschallbehandlung mit dreimal jeweils 10 ml Methanol von Benzophenon, Katalysatorrückständen, Bromethan und Triethylphosphit-Resten befreit. Von der nach Entfernen des Extraktionsmittels durch Trocknen im Stickstoffstrom bei 100°C erhaltenen grau-braunen Probe, im Folgenden als pho-P3 bezeichnet, wird ein ¹H-NMR-Spektrum in Trifluormethansulfonsäure mit externem d₆-Dimethylsulfoxid-Lock-Signal aufgenommen. Der restliche Ansatz wird mechanisch zerkleinert und 12 h mit einer 100:1 (v:v) Methanol-Salzsäure-Mischung soxlethiert. Nach Trocknen im Vakuum bei 75°C wird ein kompaktes, hellbeiges Material erhalten. Das erhaltene Produkt wird folgend als pho-P3 bezeichnet.

Auswaage : 10,24 g

Bromgehaltbestimmung: Oxidativer Aufschluß pho-P3 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%.

thermogravimetrische Analyse phoP3 (Netzsch STA 409, Heizrate 10 K/min, LuftAtmosphäre):
5 % Gew.-% Verlust bei 330°C
25% Gew.-% Verlust bei 449°C
63,7 Gew.-% Verlust bei 600°C

Der stufenartige Masseverlust zwischen 250 - 350°C von 9,1 Gew.-% durch Phosphonesterpyrolyse unter Ethen-Abspaltung entspricht mit Phosphorylierungsgrad ds(P) = 288,31 * (Masseverlust / 100) / (56,106 - Massevertust / 100) * 136.1 einem Phosphorylierungsgrad von 63,7 mol-%, entsprechend 0,64 Phosphondiethylester-Gruppen je wiederholende Monomereinheit.

Da das Produkt sich als nur in der die Phosphonester-Gruppen acidolytisch spaltenden Trifluormethansulfonsäure löslich erweist, kann zur Bestimmung des Phosphorylierungsgrades kein Lösung-NMP-Spektrum der Probe angefertigt werden.

### Beispiel 3.1: Herstellung eines phosphonsauren Poyl(elektrolyts) auf Basis des Poly(etheretherketons) VICTREX 450 P (Substanz P3)

### Herstellung der bromierten Vorstufe br-P3.1

20 g (69,37 mmol Wiederholungseinheiten) P3 werden wie für br-P3 beschrieben mit 37,04 g (208,1 mmol aktives Brom) N-Bromsuccinimid umgesetzt, wobei ca. 45 Minuten nach Zugabe der NBS-Lösung das Polymer als zäh-elastische Masse ausfällt. Aufarbeitung erfolgt durch Waschen mit Wasser, mechanische Zerkleinerung des Polymers und 24 h Soxhlet-Extraktion mit Methanol.

Es werden hellgraue, faserige Stränge erhaltenen, die sich in Chloroform, NMP, DMAc und DMF bei Raumtemperatur, sowie bei 120°C in Dimethylsulfoxid, N-Methylpyrolidon und Chloroform homogen lösen ließen. Aus einer 17,5 Gew.-% Chloroform-Lösung hergestellte Filme sind knicksstabil und mechanisch belastbar.

Vom erhaltenen Produkt, fortan als br-P3.1 bezeichet, wird ein ¹H-NMR-Spektrum in d₁-Chloroform-Lösung aufgenommen.

Auswaage br-P3.1: 32,3 g

Elementaranalyse br-P3.1:

| | | |
|---|---|---|
| C: | 48,94 % (ber.) | 47,76 % (gef.) |
| H: | 2,09 % (ber.) | 2,13 % (gef.) |
| S: | 0,00 % (ber.) | 0,00 % (gef.) |
| N: | 0,00 % (ber.) | 0,00 % (gef.) |

Mit ds_{Br} = 288,937/w(C)-3,654 ergibt sich ein ds_{Br} = 239,5 mol-%, entsprechend 2,4 Bromatome je Wiederhol-Einheit.

¹H-NMR-Spektrum von br-P3.1 (300 MHz, d₁Chloroform):
6,75 - 7,18 ppm, Integralwert 4,52 (Ar-H)
7,35-7,45 ppm, Integralwert 0,86 (Ar-H)
7,62 - 7,88 ppm, Integralwert 2,80 (Ar-H)
8,00 - 8,18 ppm, Integralwert 0,66 (Ar-H)

Vergleich der Signallagen und Zahl der Signale in ¹H-NMR-Spektren von br-P3 und P3 zeigt Substitution sowohl der p-Oxy-Phenoxy- als auch der p-Oxy-Phenonyl-Ringe der Wiederholungseinheit.

### Herstellung des phosphonsauren Polymers pho-P3.1

10 g der bromierten Vorstufe br-P3 (50 mmol Brom) werden mit 650 mg (5 mmol, entsprechend 0,1 mol-Äquivalenten bezüglich Bromgehalt) wasserfreiem Ni(II)chlorid wie unter phoP3 beschrieben in 10 g Benzophenon mit 15,7 g (62,72 mmol) Tributylphosphit umgesetzt.

Nach Abkühlen und Aufarbeitung wird ein kompaktes, hellbeiges Material erhalten. Das erhaltene Produkt wird folgend als pho-P3.1 bezeichnet und erweist sich als löslich in warmen NMP unter Zusatz von ca. 2 Vol-% konz. HBr. In DMSO lässt sich das Produkt ausreichend stark quellen, so dass ein NMR-Spektrum aufgenommen werden kann.

Auswaage phoP33.1: 10,8 g

Bromgehaltbestimmung phoP33.1: Oxidativer Aufschluß pho-P3.1 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%.

Elementaranalyse phoP3.1:

| | | |
|---|---|---|
| C: | 59,56 % (ber.) | 60,15 % (gef.) |
| H: | 7,04 % (ber.) | 6,85 % (gef.) |
| S: | 0,00 % (ber.) | 0,00 % (gef.) |

Mit dsₚ = (288,31 - w(C) / 100 - 216) / (96 - 192,2 w(C) / 100) folgt dsₚ = 217 mol-%, entsprechend 2,2 Phosphondibutylestergruppen je wiederkehrende Monomer-Einheit.

thermogravimetrische Analyse phoP3.1 (Netzsch STA 409, Heizrate 10 K/min, Luft-Atmosphäre):
5 % Gew.-% Verlust bei 279°C
25% Gew.-% Verlust bei 322°C
50,1 Gew.-% Verlust bei 600°C

Der stufenartige Masseverlust zwischen 225 - 350°C von 29,6 Gew.-% durch Phosphonesterpyrolyse unter Buten-Abspaltung entspricht mit Phosphorylierungsgrad ds(P) = 288,31 * (Masseverlust / 100) / (112,22 - Masseverlust) * 192,2 einem Phosphorylierungsgrad von 153,0 mol-%, entsprechend 1,53 Phosphondibutylester-Gruppen je wiederholende Monomereinheit.

¹H-NMR-Spektrum von pho-P3.1 (300.MHz, d₆-DMSO):
0,3 - 0,7 ppm, Integralwert 3,1 (Alkyl-CH₃)
0,7 - 1,8 ppm, Integralwert 2,3 (Alkyl-CH₂)
3,5 - 4,4 ppm, Integralwert 2,1 (Alkyl-CH₂)
5,1 - 6,0 ppm, Integralwert 2,0 (O-CH₂)
6,4 - 8,4 ppm, Integralwert 3,1 (Ar-H)

Das Verhältnis der Integrale x = Integral(Butyl-CH₃) / Integral(Aryl-H) = 1,0 ergibt mit Phosphonylierungsgrad ds(P) = 12x / (6 + x) einen Phosphonylierungsgrad von 171 mol-%, enstprechend 1,7 Phosphonbutylestergruppen je wiederholende Monomereinheit.

## Patentansprüche

1. Verfahren zur Herstellung von polymeren aromatischen Phosphonaten mit einem Gehalt an Halogen von weniger als 1 Gew.-%, bezogen auf die Masse des polymeren aromatischen Phosphonats, durch Reaktion von halogenierten Polyarylenverbindungen mit Phosphorigsäureestern in Anwesenheit eines Katalysators enthaltend mindestens ein Metall ausgewählt aus der Gruppe bestehend aus Ni, Pd, Pt, Rh, Ru, Os und Ir, wobei die Reaktion in einem stickstofffreien Lösungsmittel bei Temperaturen von 150 bis 250°C erfolgt.

2. Verfahren nach Anspruch 1, **dadurch gekennzeichnet, dass** die polymeren aromatischen Phosphonate Einheiten der folgenden Formel I aufweisen 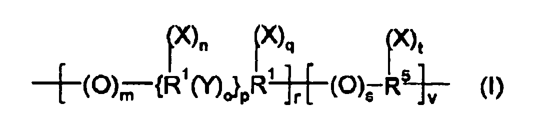 worin bedeuten:
X -P(=O) (OR²)(OR³),
Y Carbonyl, Sulfonyl,
R¹, R⁵ unabhängig voneinander 2- oder polyvalente aromatische Reste, die substituiert oder unsubstituiert sein können und Heteroatome enthalten können,
m, o, s unabhängig voneinander 0 oder 1,
n, q, t unabhängig voneinander 0 oder eine ganze Zahl, wobei n, q und t nicht gleichzeitig 0 sein können,
r, v unabhängig voneinander 0 bis 1, wobei die Summe von r und v 0,95 bis 1,05 beträgt,
p 0 oder eine ganze Zahl ≥ 1,
R², R³ unabhängig voneinander Alkyl, Alkenyl, Cycloalkyl, Aralkyl, wobei die vorstehend genannten Gruppen substituiert sein können und/oder Hete- roatome enthalten können.

3. Verfahren nach Anspruch 2, **dadurch gekennzeichnet, dass** R¹ und R⁵ unabhängig voneinander ausgewählt sind aus der Gruppe bestehend aus 1,4-Phenylen, 1,3-Phenylen, 1,2-Phenylen, 1,6-Naphthylen, 2,4-Naphthylen, 2,6-Carbazol, 3-Phenyl-1,4-arylen, 3-Alkyhl,4-arylen, 2-Alkyl-1,4-arylen, 2-Alkoxy-1,4-Arylen, 3-Alkoxy-1,4-arylen, 2,6-Dimethyl-1,4-phenylen, 2,3,5,6-Tetramethyl-1,4-phenylen, 4,4'-Biphenylen, 3,3'-Diphenyl-4,4'-biphenylen und Arylenalkylen.

4. Verfahren nach einem der Ansprüche 1 bis 3, **dadurch gekennzeichnet, dass** die halogenierten Polarylenverbindungen die allgemeine Formel II aufweisen 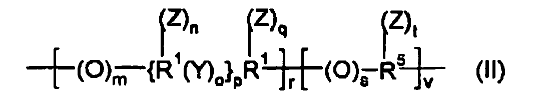 worin bedeuten
Z Halogen, bevorzugt Br, I, besonders bevorzugt Br,
Y Carbonyl, Sulfonyl,
R¹, R⁵ unabhängig voneinander 2- oder polyvalente aromatische Reste, die substituiert oder unsubstituiert sein können und Heteroatome enthalten können,
m, o, s unabhängig voneinander 0 oder 1,
n, q, t unabhängig voneinander 0 oder eine ganze Zahl, wobei n, q und t nicht gleichzeitig 0 sein können,
r, v unabhängig voneinander 0 bis 1, wobei die Summe von r und v 0,95 bis 1,05 beträgt,
p 0 oder eine ganze Zahl ≥ 1.

5. Verfahren nach einem der Ansprüche 1 bis 4, **dadurch gekennzeichnet, dass** Alkylester der Phosphorigsäure eingesetzt werden, die die allgemeine Formel III aufweisen
P(OR²)(OR³)(OR⁴) (III)
worin bedeuten:
R², R³, R⁴ unabhängig voneinander Alkyl, Alkenyl, Cycloalkyl, Aralkyl, wobei die vorstehend genannten Gruppen substituiert sein können und/oder Hete- roatome aufweisen können.

6. Verfahren nach einem der Ansprüche 1 bis 5, **dadurch gekennzeichnet, dass** der Katalysator Ni, bevorzugt Ni(II) oder Ni(0), besonders bevorzugt Ni(II) enthält.

7. Verfahren nach einem der Ansprüche 1 bis 6, **dadurch gekennzeichnet, dass** der Katalysator In einer Menge von 0,05 bis < 1 molaren Äquivalenten, bezogen auf die Menge der molaren Äquivalente des Halogens in der halogenierten Polyarylenverbindung, eingesetzt wird.

8. Verfahren nach einem der Ansprüche 1 bis 7, **dadurch gekennzeichnet, dass** das stickstofffreie Lösungsmittel ausgewählt ist aus der Gruppe bestehend aus Diphenylether, Benzophenon, Diphenylsulfon, den Alkyl- oder Alkoxy-substituierten Derivaten dieser Verbindungen, aliphatischen, teilaromatischen, aromatischen Oligo- und Polyethern, aliphatischen, teilaromatischen, aromatischen β-Diketonen, den Alkyl-, Aryl-, Alkoxy- oder Aryloxy-substituierten Derivaten dieser Verbindungen, aliphatischen, teilaromatischen, aromatischen Ketoethem, aliphatischen, teilaromatischen, aromatischen Carbonsäuren, aliphatischen, teilaromatischen, aromatischen Carbonaten und Mischungen der vorstehend genannten Verbindungen, bevorzugt Benzophenon, Diphenylether und Diphenylsulfon sowie Mischungen der genannten Verbindungen.

9. Verfahren zur Verstellung von polymeren aromatischen Phosphonaten mit einem Gehalt an Halogen von weniger als 1 Gew.-%, bezogen auf die Masse des polymeren aromatischen Phosphonats, umfassend die Schritte:
i) Halogenierung einer Polyarylenverbindung, wobei eine halogenierte Polyarylenverbindung erhalten wird,
ii) Umsetzung der halogenierten Polyarylenverbindung mit Phosphorigsäureestem in Anwesenheit eines Katalysators enthaltend mindestens ein Metall ausgewählt aus der Gruppe bestehend aus Ni, Pd, Pt, Rh, Ru, Os und Ir, wobei die Reaktion in einem stickstofffreien Lösungsmittel bei Temperaturen von 150°C bis 250°C erfolgt.

10. Verfahren nach Anspruch 9, **dadurch gekennzeichnet, dass** die in Schritt i) eingesetzte Polyarylenverbindung die allgemeine Formel IV aufweist 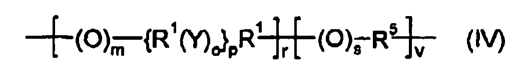 worin bedeuten
Y Carbonyl, Sulfonyl,
R¹, R⁵ unabhängig voneinander 2- oder polyvalente aromatische Reste, die substituiert oder unsubstituiert sein können und Heteroatome enthalten können,
m, o, s unabhängig voneinander 0 oder 1,
r, v unabhängig voneinander 0 bis 1, wobei die Summe von r und v 0,95 bis 1,05 beträgt,
p 0 oder eine ganze Zahl ≥ 1.

11. Verfahren zur Herstellung von polymeren aromatischen Phosphonsäuren umfassend die Schritte
a) Herstellung von polymeren aromatischen Phosphonaten gemäß einem Verfahren nach einem der Ansprüche 1 bis 10,
b) Esterspaltung der erhaltenen polymeren aromatischen Phosphonate.

12. Polymere aromatische Phosphonate hergestellt nach einem Verfahren gemäß einem der Ansprüche 1 bis 10 mit einem Gehalt an Halogen von weniger als 1 Gew.-%, bezogen auf die Masse des polymeren aromatischen Phosphonats.

13. Polymere aromatische Phosphonsäuren hergestellt nach einem Verfahren gemäß Anspruch 11 mit einem Gehalt an Halogen von weniger als 1 Gew.-%, bezogen auf die Masse des polymeren aromatischen Phosphonats.

14. Mischungen enthaltend mindestens ein polymeres aromatisches Phosphonat hergestellt nach einem Verfahren gemäß einem der Ansprüche 1 bis 10 oder gemäß Anspruch 12 und/oder enthaltend mindestens eine polymere aromatische Phosphonsäure hergestellt gemäß einem Verfahren gemäß Anspruch 11 oder gemäß Anspruch 13 und mindestens ein weiteres Polymer.

15. Membranen, Filme, Composit- oder Verbundmaterialien enthaltend mindestens ein polymeres aromatisches Phosphonat hergestellt gemäß einem der Ansprüche 1 bis 10 oder gemäß Anspruch 12 und/oder mindestens eine polymere aromatische Phosphonsäure hergestellt gemäß Anspruch 11 oder gemäß Anspruch 13 oder eine Mischung gemäß Anspruch 14.

16. Verwendung von polymeren aromatischen Phosphonaten hergestellt gemäß einem der Ansprüche 1 bis 10 oder gemäß Anspruch 12 und/oder polymeren aromatischen Phosphonsäuren hergestellt gemäß Anspruch 11 oder gemäß Anspruch 13 oder einer Mischung gemäß Anspruch 14 in Membranen, Filmen, Composit- oder Verbundmateriallen.

17. Verwendung von Membranen gemäß Anspruch 15 in Brennstoffzellen oder als Membranen in der Trenntechnik.

18. Brennstoffzelle enthaltend mindestens eine Membran gemäß Anspruch 15 oder mindestens ein polymeres aromatisches Phosphonat hergestellt gemäß einem der Ansprüche 1 bis 10 oder gemäß Anspruch 12 und/oder mindestens eine polymere aromatische Phosphonsäure gemäß Anspruch 13 oder hergestellt gemäß Anspruch 11 oder eine Mischung gemäß Anspruch 14.

19. Verwendung von polymeren aromatischen Phosphonaten hergestellt gemäß einem der Ansprüche 1 bis 10 oder gemäß Anspruch 12 und/oder polymeren aromatischen Phosphonsäuren hergestellt gemäß Anspruch 11 oder gemäß Anspruch 13 oder einer Mischung gemäß Anspruch 14 zur Quellungsminderung von aromatischen Polyphosphonsäure- und Polyelektrolyt-Polyphosphonsäure-Blend-Membranen via ionisch vernetzender in-situ Bildung von Zirkon(IV)-Polyphosphonaten.

20. Membranen nach Anspruch 15, enthaltend Zirkon(IV)-Polyphosphonate.

## Claims

1. A process for preparing polymeric aromatic phosphonates having a content of halogen of less than 1% by weight, based on the mass of the polymeric aromatic phosphonate, by reacting halogenated polyarylene compounds with phosphorous esters in the presence of a catalyst comprising at least one metal selected from the group consisting of Ni, Pd, Pt, Rh, Ru, Os and Ir, wherein the reaction is carried out in a nitrogen-free solvent at temperatures of from 150°C to 250°C.

2. The process according to claim 1, wherein the polymeric aromatic phosphonates comprise units of the following formula I 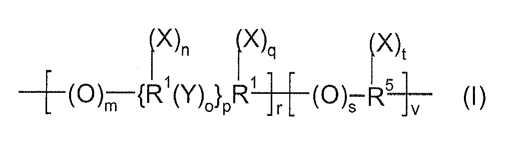 where:
X is -P(=O) (OR²) (OR³),
Y is carbonyl or sulfonyl,
R¹, R⁵ are, independently of one another, divalent or polyvalent aromatic radicals which may be substituted or unsubstituted and may comprise heteroatoms,
m, o, s are each, independently of one another, 0 or 1,
n, q, t are each, independently of one another, 0 or an integer, with n, q and t not simultaneously being 0,
r, v are each, independently of one another, from 0 to 1, with the sum of r and v being from 0.95 to 1.05,
p is 0 or an integer ≥ 1,
R², R³ are each, independently of one another, alkyl, alkenyl, cycloalkyl, aralkyl, with the abovementioned groups being able to be substituted and/or being able to comprise heteroatoms.

3. The process according to claim 2, wherein R¹ and R⁵ are selected independently from the group consisting of 1,4-phenylene, 1,3-phenylene, 1,2-phenylene, 1,6-naphthylene, 2,4-naphthylene, 2,6-carbazole, 3-phenyl-1,4-arylene, 3-alkyl-1,4-arylene, 2-alkyl-1,4-arylene, 2-alkoxy-1,4-arylene, 3-alkoxy-1,4-arylene, 2,6-dimethyl-1,4-phenylene, 2,3,5,6-tetramethyl-1,4-phenylene, 4,4'-biphenylene, 3,3'-diphenyl-4,4'-biphenylene and arylenealkylene.

4. The process according to any of claims 1 to 3, wherein the halogenated polyarylene compounds have the general formula II 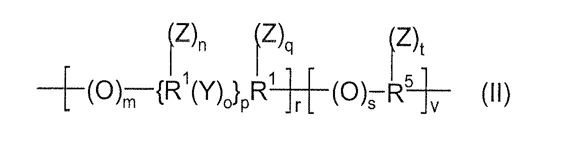 where
Z is halogen, preferably Br, I, particularly preferably Br,
Y is carbonyl or sulfonyl,
R¹, R⁵ are, independently of one another, divalent or polyvalent aromatic radicals which may be substituted or unsubstituted and may comprise heteroatoms,
m, o, s are each, independently of one another, 0 or 1,
n, q, t are each, independently of one another, 0 or an integer, with n, q and t not simultaneously being 0,
r, v are each, independently of one another, from 0 to 1, with the sum of r and v being from 0.95 to 1.05,
p is 0 or an integer ≥ 1.

5. The process according to any of claims 1 to 5, wherein alkyl esters of phosphorous acid which have the general formula III
P(OR²)(OR³)(OR⁴) (III)
where:
R², R³, R⁴ are each, independently of one another, alkyl, alkenyl, cycloalkyl, aralkyl, with the abovementioned groups being able to be substituted and/or being able to comprise heteroatoms,
are used.

6. The process according to any of claims 1 to 6, wherein the catalyst comprises Ni, preferably Ni(II) or Ni(O), particularly preferably Ni(II).

7. The process according to any of claims 1 to 6, wherein the catalyst is used in an amount of from 0.05 to < 1 molar equivalent, based on the number of molar equivalents of the halogen in the halogenated polyarylene compound.

8. The process according to any of claims 1 to 8, wherein the nitrogen-free solvent is selected from the group consisting of diphenyl ether, benzophenone, diphenyl sulfone, the alkyl- or alkoxy-substituted derivatives of these compounds, aliphatic, partly aromatic, aromatic oligoethers and polyethers, aliphatic, partly aromatic, aromatic -diketones, the alkyl-, aryl-, alkoxy- or aryloxy-substituted derivatives of these compounds, aliphatic, partly aromatic, aromatic keto ethers, aliphatic, partly aromatic, aromatic carboxylic acids, aliphatic, partly aromatic, aromatic carbonates and mixtures of the abovementioned compounds, preferably benzophenone, diphenyl ether and diphenyl sulfone and also mixtures of the compounds mentioned.

9. A process for preparing polymeric aromatic phosphonates having a content of halogen of less than 1% by weight, based on the mass of the polymeric aromatic phosphonate, which comprises the steps:
i) halogenation of a polyarylene compound to give a halogenated polyarylene compound,
ii) reaction of the halogenated polyarylene compound with phosphorous esters in the presence of a catalyst comprising at least one metal selected from the group consisting of Ni, Pd, Pt, Rh, Ru, Os and Ir, with the reaction being carried out in a nitrogen-free solvent at temperatures of from 150°C to 250°C.

10. The process according to claim 9, wherein the polyarylene compound used in step i) has the general formula IV 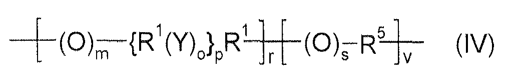 where
Y is carbonyl or sulfonyl,
R¹, R⁵ are, independently of one another, divalent or polyvalent aromatic radicals which may be substituted or unsubstituted and may comprise heteroatoms,
m, o, s are each, independently of one another, 0 or 1,
r, v are each, independently of one another, from 0 to 1, with the sum of r and v being from 0.95 to 1.05,
p is 0 or an integer ≥ 1.

11. A process for preparing polymeric aromatic phosphonic acids, which comprises the steps
a) preparation of polymeric aromatic phosphonates by a process according to any of claims 1 to 10,
b) ester cleavage of the polymeric aromatic phosphonates obtained.

12. A polymeric aromatic phosphonate prepared by a process according to any of claims 1 to 10 having a content of halogen of less than 1% by weight, based on the mass of the polymeric aromatic phosphonate.

13. A polymeric aromatic phosphonic acid prepared by a process according to claim 11 having a content of halogen of less than 1% by weight, based on the mass of the polymeric aromatic phosphonate.

14. A blend comprising at least one polymeric aromatic phosphonate prepared by a process according to any of claims 1 to 10 or according to claim 12 and/or comprising at least one polymeric aromatic phosphonic acid prepared by a process according to claim 11 or according to claim 13 and at least one further polymer.

15. A membrane, film or composite comprising at least one polymeric aromatic phosphonate prepared according to any of claims 1 to 10 or according to claim 12 and/or at least one polymeric aromatic phosphonic acid prepared according to claim 11 or according to claim 13 or a blend according to claim 14.

16. The use of polymeric aromatic phosphonates prepared according to any of claims 1 to 10 or according to claim 12 and/or polymeric aromatic phosphonic acids prepared according to claim 11 or according to claim 13 or a blend according to claim 14 in membranes, films or composites.

17. The use of membranes according to claim 15 in fuel cells or as membranes in separation technology.

18. A fuel cell comprising at least one membrane according to claim 15 or at least one polymeric aromatic phosphonate prepared according to any of claims 1 to 10 or according to claim 12 and/or at least one polymeric aromatic phosphonic acid according to claim 13 or prepared according to claim 11 or a blend according to claim 14.

19. The use of polymeric aromatic phosphonates prepared according to any of claims 1 to 10 or according to claim 12 and/or polymeric aromatic phosphonic acids prepared according to claim 11 or according to claim 13 or a blend according to claim 14 for the reduction of swelling of aromatic polyphosphonic acid membranes and polyelectrolyte-polyphosphonic acid blend membranes via ionically crosslinking in-situ formation of zirconium(IV) polyphosphonates.

20. A membrane according to claim 15 comprising zirconium(IV) polyphosphonates.

## Revendications

1. Procédé pour la préparation de phosphonates aromatiques polymères ayant une teneur en halogène de moins de 1% en poids, par rapport à la masse du phosphonate aromatique polymère, par réaction de composés polyarylène halogénés avec des esters d'acide phosphoreux en présence d'un catalyseur contenant au moins un métal choisi dans le groupe constitué par Ni, Pd, Pt, Rh, Ru, Os et Ir, la réaction s'effectuant dans un solvant non azoté, à des températures de 150 à 250 °C.

2. Procédé selon la revendication 1, **caractérisé en ce que** les phosphonates aromatiques polymères comportent des motifs phosphonates aromatiques polymères de formule I suivante 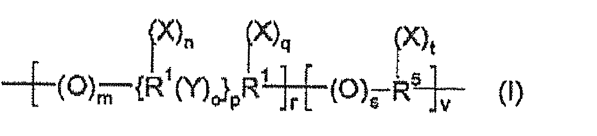 dans laquelle
X représente -P(=O)(OR²)(OR³),
Y représente un groupe carbonyle, sulfonyle,
R¹, R⁵ représentent, indépendamment l'un de l'autre, des radicaux aromatiques di- ou polyvalents,
m, o, s qui peuvent être substitués ou non substitués et peuvent contenir des hétéroatomes, représentent chacun indépendamment 0 ou 1,
n, q, t représentent chacun indépendamment 0 ou un nombre entier, n, q et t ne pouvant pas être simultanément 0,
r, v représentent, indépendamment l'un de l'autre, 0 à 1, la somme de r et v valant de 0,95 à 1,05,
p représente 0 ou un nombre entier ≥ 1,
R², R³ représentent, indépendamment l'un de l'autre, un groupe alkyle, alcényle, cycloalkyle, aralkyle, les groupes nommés précédemment pouvant être substitués et/ou pouvant contenir des hétéroatomes.

3. Procédé selon la revendication 2, **caractérisé en ce que** R¹ et R⁵ sont choisis, indépendamment l'un de l'autre, dans l'ensemble constitué par les groupes 1,4-phénylène, 1,3-phénylène, 1,2-phénylène, 1,6-naphtylène, 2,4-naphtylène, 2,6-carbazole, 3-phényl-1,4-arylène, 3-alkyl-1,4-arylène, 2-alkyl-1,4-arylène, 2-alcoxy-1,4-arylène, 3-alcoxy-1,4-arylène, 2,6-diméthyl-1,4-phénylène, 2,3,5,6-tétraméthyl-1,4-phénylène, 4,4'-biphénylène, 3,3'-diphényl-4,4'-biphénylène et arylène-alkylène.

4. Procédé selon l'une quelconque des revendications 1 à 3, **caractérisé en ce que** les composés polyarylène halogénés présentent la formule générale II 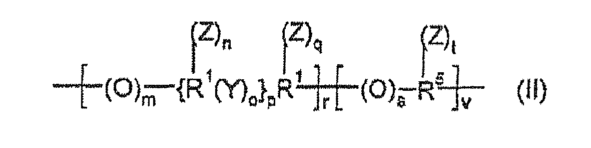 dans laquelle
Z représente un atome d'halogène, de préférence Br, I, de façon particulièrement préférée Br,
Y représente un groupe carbonyle, sulfonyle,
R¹, R⁵ représentent, indépendamment l'un de l'autre, des radicaux aromatiques di- ou polyvalents, qui peuvent être substitués ou non substitués et peuvent contenir des hétéroatomes,
m, o, s représentent chacun indépendamment 0 ou 1,
n, q, t représentent chacun indépendamment 0 ou un nombre entier, n, q et t ne pouvant pas être simultanément 0,
r, v représentent, indépendamment l'un de l'autre, 0 à 1, la somme de r et v valant de 0,95 à 1,05,
p représente 0 ou un nombre entier ≥ 1.

5. Procédé selon l'une quelconque des revendications 1 à 4, **caractérisé en ce qu'**on utilise des esters alkyliques de l'acide phosphoreux, qui présentent la formule générale III
P(OR²) (OR³) (OR⁴) (III)
dans laquelle :
R², R³, R⁴ représentent chacun indépendamment un groupe alkyle, alcényle, cycloalkyle, aralkyle, les groupes nommés précédemment pouvant être substitués et/ou pouvant contenir des hétéroatomes.

6. Procédé selon l'une quelconque des revendications 1 à 5, **caractérisé en ce que** le catalyseur contient du nickel, de préférence Ni(II) ou Ni(O), de façon particulièrement préférée Ni(II).

7. Procédé selon l'une quelconque des revendications 1 à 6, **caractérisé en ce que** le catalyseur est utilisé en une quantité de 0,05 à < 1 équivalent molaire, par rapport à la quantité des équivalents molaires de l'halogène dans le composé polyarylène halogéné.

8. Procédé selon l'une quelconque des revendications 1 à 7, **caractérisé en ce que** le solvant non azoté est choisi dans le groupe constitué par l'éther diphénylique, la benzophénone, la diphénylsulfone, les dérivés substitués par alkyle ou alcoxy de ces composés, des oligo- et polyéthers aliphatiques, partiellement aromatiques, aromatiques, des β-dicétones aliphatiques, partiellement aromatiques, aromatiques, les dérivés substitués par alkyle, aryle, alcoxy ou aryloxy de ces composés, des cétoéthers aliphatiques, partiellement aromatiques, aromatiques, des acides carboxyliques aliphatiques, partiellement aromatiques, aromatiques, des carbonates aliphatiques, partiellement aromatiques, aromatiques et des mélanges des composés nommés précédemment, de préférence la benzophénone, l'éther diphénylique et la diphénylsulfone ainsi que des mélanges des composés nommés.

9. Procédé pour la préparation de phosphonates aromatiques polymères ayant une teneur en halogène de moins de 1 % en poids, par rapport à la masse du phosphonate aromatique polymère, comprenant les étapes :
i) halogénation d'un composé polyarylène, avec obtention d'un composé polyarylène halogéné,
ii) mise en réaction du composé polyarylène halogéné avec des esters d'acide phosphoreux en présence d'un catalyseur contenant au moins un métal choisi dans le groupe constitué par Ni, Pd, Pt, Rh, Ru, Os et Ir, la réaction s'effectuant dans un solvant non azoté, à des températures de 150 °C à 250 °C.

10. Procédé selon la revendication 9, **caractérisé en ce que** le composé polyarylène utilisé dans l'étape i) présente la formule générale IV 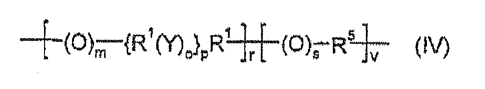 dans laquelle
Y représente un groupe carbonyle, sulfonyle,
R¹, R⁵ représentent, indépendamment l'un de l'autre, des radicaux aromatiques di- ou polyvalents, qui peuvent être substitués ou non substitués et peuvent contenir des hétéroatomes,
m, o, s représentent chacun indépendamment 0 ou 1,
r, v représentent, indépendamment l'un de l'autre, 0 à 1, la somme de r et v valant de 0,95 à 1,05,
p représente 0 ou un nombre entier ≥ 1,

11. Procédé pour la préparation d'acides phosphoniques aromatiques polymères, comprenant les étapes
a) préparation de phosphonates aromatiques polymères conformément à un procédé selon l'une quelconque des revendications 1 à 10,
b) coupure d'esters des phosphonates aromatiques polymères obtenus.

12. Phosphonates aromatiques polymères préparés conformément à un procédé selon l'une quelconque des revendications 1 à 10, ayant une teneur en halogène de moins de 1% en poids, par rapport à la masse du phosphonate aromatique polymère.

13. Acides phosphoniques aromatiques polymères préparés conformément à un procédé selon la revendication 11, ayant une teneur en halogène de moins de 1 % en poids, par rapport à la masse du phosphonate aromatique polymère.

14. Mélanges contenant au moins un phosphonate aromatique polymère selon la revendication 12 ou préparé conformément à un procédé selon l'une quelconque des revendications 1 à 10 et/ou contenant au moins un acide phosphorique aromatique polymère selon la revendication 13 ou préparé conformément à un procédé selon la revendication 11, et au moins un autre polymère.

15. Membranes, films, matériau composites ou composés, contenant au moins un phosphonate aromatique polymère selon la revendication 12 ou préparé selon l'une quelconque des revendications 1 à 10 et/ou au moins un acide phosphonique aromatique polymère selon la revendication 13 ou préparé selon la revendication 11 ou un mélange selon la revendication 14.

16. Utilisation de phosphonates aromatiques polymères selon la revendication 12 ou préparés selon l'une quelconque des revendications 1 à 10 et/ou d'acides phosphoniques aromatiques polymères selon la revendication 13 ou préparés selon la revendication 11 ou d'un mélange selon la revendication 14, dans des membranes, films, matériaux composites ou composés.

17. Utilisation de membranes selon la revendication 15 dans des cellules à combustible ou en tant que membranes dans la technique de séparation.

18. Cellule à combustible contenant au moins une membrane selon la revendication 15 ou au moins un phosphonate aromatique polymère selon la revendication 12 ou préparé selon l'une quelconque des revendications 1 à 10 et/ou au moins un acide phosphonique aromatique polymère selon la revendication 13 ou préparé selon la revendication 11 ou un mélange selon la revendication 14.

19. Utilisation de phosphonates aromatiques polymères selon la revendication 12 ou préparés selon l'une quelconque des revendications 1 à 10 et/ou d'acides phosphoniques aromatiques polymères selon la revendication 13 ou préparés selon la revendication 11 ou d'un mélange selon la revendication 14, pour réduire le gonflement de membranes à base d'acide polyphosphonique et de mélanges de polyélectrolyte-acide polyphosphonique par formation, avec réticulation in situ, de polyphosphonates de zirconium(IV).

20. Membranes selon la revendication 15, contenant des polyphosphonates de zirconium(IV).
